(19) **Europäisches Patentamt European Patent Office Office européen des brevets**

(11) **EP 2 403 352 B1**

(12) **FASCICULE DE BREVET EUROPEEN**

(45) Date de publication et mention de la délivrance du brevet:
**15.03.2017 Bulletin 2017/11**

(21) Numéro de dépôt: **10710085.1**

(22) Date de dépôt: **25.02.2010**

(51) Int Cl.:
*A23J 1/14* *(2006.01)*     *A23J 3/14* *(2006.01)*
*A23J 3/26* *(2006.01)*     *C08J 3/12* *(2006.01)*
*A23L 33/17* *(2016.01)*     *A23L 33/21* *(2016.01)*
*A23K 10/00* *(2016.01)*     *A23K 10/30* *(2016.01)*

(86) Numéro de dépôt international:
**PCT/FR2010/050327**

(87) Numéro de publication internationale:
**WO 2010/100368 (10.09.2010 Gazette 2010/36)**

(54) **POUDRE GRANULÉE CONTENANT DES PROTÉINES VÉGÉTALES ET DES FIBRES, LEUR PROCÉDÉ D'OBTENTION ET LEURS UTILISATIONS**

GRANULAT MIT PFLANZENPROTEINEN UND -FASERN, HERSTELLUNGSVERFAHREN DAFÜR UND IHRE VERWENDUNG

GRANULATED POWDER CONTAINING VEGETABLE PROTEINS AND FIBRES, METHOD FOR PRODUCING SAME, AND USE THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **02.03.2009 FR 0951293**

(43) Date de publication de la demande:
**11.01.2012 Bulletin 2012/02**

(73) Titulaire: **Roquette Frères**
**62136 Lestrem (FR)**

(72) Inventeurs:
• **BOURSIER, Bernard**
**F-62138 Violaines (FR)**
• **PASSE, Damien**
**F-59500 Douai (FR)**

(74) Mandataire: **Gallois, Valérie et al**
**Cabinet BECKER & ASSOCIES**
**25, rue Louis Le Grand**
**75002 Paris (FR)**

(56) Documents cités:
| | |
|---|---|
| EP-A1- 1 454 539 | EP-A1- 1 972 345 |
| EP-A2- 0 787 437 | WO-A1-00/35303 |
| WO-A1-99/53777 | WO-A1-2004/024177 |
| WO-A2-2007/032000 | WO-A2-2008/000475 |
| FR-A1- 2 889 417 | US-A- 4 754 027 |
| US-A- 6 056 949 | US-A1- 2002 146 487 |

**Description**

DOMAINE DE L'INVENTION

La présente invention a pour objet une poudre granulée contenant des protéines végétales et des fibres, ainsi que son procédé d'obtention et ses utilisations.

ARRIERE-PLAN TECHNOLOGIQUE

Les habitudes alimentaires se sont profondément transformées dans les pays industrialisés depuis la seconde guerre mondiale et même plus récemment sous l'impulsion de l'industrie agro-alimentaire dont l'influence croissante sur le comportement nutritionnel des populations tend à estomper progressivement les différences liées aux habitudes nutritionnelles traditionnelles. Cette évolution contribue vraisemblablement à accroître les risques lithiasiques, cardiovasculaires, diabétiques, d'obésité, de certains cancers d'origine nutritionnelle dans les sociétés industrielles où les besoins énergétiques quotidiens ont tendance à se réduire chez un nombre croissant d'individus ayant une activité de plus en plus sédentaire.

Les protéines représentent, après les glucides et les lipides, la troisième grande source énergétique de notre alimentation. Elles sont fournies aussi bien par des produits d'origine animale (viandes, poissons, oeufs, produits laitiers) que par des aliments végétaux (céréales, légumineuses,..). Les besoins quotidiens de protéines sont compris entre 12 et 20% de la ration alimentaire. Dans les pays industrialisés, ces apports sont majoritairement sous la forme de protéines d'origine animale. Les études le montrent, nous consommons trop de protéines d'origine animale (70% de nos apports en moyenne) et pas assez de protéines végétales (30%). De plus, notre alimentation est trop riche en lipides, notamment en acides gras saturés, en sucres, et trop pauvre en fibres. En matière d'apports protéiques, l'insuffisance comme l'excès sont préjudiciables : en cas d'apports insuffisants le développement et la croissance risquent d'être perturbés. En cas d'apports excessifs les acides aminés constitutifs des protéines sont oxydés ou convertis en glucides ou en graisses. Un tel excès n'est peut-être pas sans conséquence défavorable surtout dans le cas des protéines animales: outre le risque propre d'oxydation et de conversion des acides aminés, il faut se souvenir que les aliments riches en protéines animales le sont souvent aussi en lipides et en acides gras saturés. Une étude récente incrimine la responsabilité de l'excès de protéines animales dans la genèse d'une obésité ultérieure.

De plus, les atouts pour la santé sont évidents puisque la consommation excessive de protéines animales a été mise en avant dans les causes d'augmentation de certains cancers et maladies cardiovasculaires.

De plus, l'élevage intensif d'animaux génère de graves problèmes environnementaux. La production de viande requiert deux fois plus d'eau et de deux à quatre fois plus d'espace que la production nécessaire à une alimentation à base de plantes. L'élevage représente également une pollution importante des sols et de l'air. Il a été prouvé récemment que la pollution de l'élevage bovin dépassait la pollution automobile au niveau du rejet d'azote.

Enfin, l'élevage représente un formidable gâchis des ressources mondiales en eau : il faut 7 kg de céréales pour produire 1 kg de boeuf - 4 kg pour produire 1 kg de porc - 2 kg pour produire 1 kg de volaille. Les animaux d'élevage sont nourris avec des céréales comestibles par l'homme comme le soja (on parle alors de tourteau) et le maïs. Le soja est aujourd'hui au Brésil la principale cause de déforestation de l'Amazonie.

Ainsi les protéines animales issues de la viande présentent beaucoup de désavantages, tant sur le plan de la santé que sur le plan environnemental.

En parallèle, les protéines animales issues du lait ou des oeufs peuvent être allergènes, entraînant des réactions très gênantes, voire même dangereuses au quotidien.

Ainsi, les oeufs sont des trophallergènes (un type d'allergènes) qui pénètrent par voie digestive et qui provoquent chez certains individus une libération d'histamine par les cellules de l'organisme. C'est cette substance qui est responsable des symptômes de l'inflammation et qui entraîne la contraction des muscles des bronches. L'hypersensibilité est le plus souvent liée au blanc de l'oeuf. Par contre, chez certaines personnes ce sont les protéines contenues dans le jaune d'oeuf qui provoquent des réactions allergiques. L'allergie aux oeufs est particulière car elle cause la gamme complète des symptômes associés aux allergies alimentaires comme des ballonnements, des troubles digestifs, des éruptions cutanées, de la nausée, de la diarrhée, des crises d'asthme et de l'eczéma. L'allergie au blanc d'oeuf peut mener jusqu'au choc anaphylactique, une violente réaction pouvant entraîner la mort de la personne allergique si elle ne reçoit pas immédiatement une injection d'adrénaline.

L'allergie aux produits laitiers est une des réactions allergiques les plus répandues. Les études démontrent que 65 % des personnes qui souffrent d'allergies alimentaires sont allergiques au lait. La forme adulte de l'allergie au lait, appelée ici «allergie aux produits laitiers», est une réaction du système immunitaire qui crée des anticorps pour combattre l'aliment indésirable. Cette allergie est différente de l'allergie aux protéines du lait de vache (protéines bovines), qui touche les nouveau-nés et les enfants. L'allergie aux produits laitiers cause des symptômes variés tels que constipation, diarrhée, flatulences, eczéma, urticaire, nausées, migraines, infections, crampes abdominales, congestion nasale et même de graves crises d'asthme. Les personnes allergiques doivent complètement éliminer le lait, les produits laitiers et leurs dérivés de leur alimentation. Les termes suivants sont des indicateurs de présence de lait de vache ou de ses dérivés dans les ingrédients d'un produit : babeurre, caséinate de calcium, caséinate de sodium, caséine, caséinate, caséine hydrolysée, solides de lait séchés, lactalbumine, lactose, lactoglobuline, lait maigre, poudre de lait, lait condensé sucré et petit lait.

Un autre problème majeur lié aux protéines laitières est leur coût qui ne cesse d'augmenter. L'application des quotas laitiers a provoqué d'une part une réduction drastique de la quantité de protéines laitières disponibles pour la fabrication de produits alimentaires et d'autre part de fortes fluctuations de leurs prix. Les industriels cherchent de plus en plus des produits de substitution de ces protéines laitières.

Au vu de tous les désavantages, tant économiques, environnementaux que nutritionnels liés à la consommation de protéines animales issues de la viandes et/ou de produits dérivés, il en résulte un grand intérêt pour l'emploi de protéines de substitution, également appelées protéines alternatives, parmi lesquelles se classent les protéines végétales. Le marché alternatif de ces protéines se développe rapidement, pour de nombreuses raisons. Ces protéines ont une influence profonde sur la formulation des aliments équilibrés et des régimes basés sur un faible index glycémique (GI) et sur un fort apport protéique, et les fabricants traditionnels commencent à chercher de nouvelles sources de protéines pour enrichir leurs produits.

Par exemple, le document WO 2008/066308 décrit une composition alimentaire contenant une combinaison optimale de nutriments essentiels à une alimentation équilibrée associés à des protéines de soja. Cette composition permet de réduire les problèmes d'obésité en réduisant entre autre les apports protéiques néfastes.

Le document US2002/146487 décrit un procédé de préparation de granules de protéine de soja facilement dispersibles ainsi que le procédé d'obtention desdits granules.

Le document EP 0522800 décrit un nouveau procédé de traitement d'un concentré de protéine végétale permettant d'en améliorer sa fonctionnalité à lier la graisse et l'eau, ainsi que son application en remplacement des protéines animales dans la fabrication de saucisses.

Dans le document EP 0238946, il est décrit un isolat de protéines amélioré provenant de graines d'un légume à grains à teneur en lipides relativement basse, son procédé de préparation ainsi que son utilisation en tant qu'additif dans la fabrication de saucisses et cervelas.

La société Demanderesse s'est également attelée à cette recherche afin de pouvoir répondre aux demandes croissantes des industriels pour des composés possédant des propriétés fonctionnelles intéressantes sans pour autant présenter les inconvénients de certains composés déjà existants.

En effet dans des domaines aussi diversifiés que l'alimentaire, la pharmacie, la cosmétique, l'agrochimie, les matériaux de construction, les papiers-cartons, les industriels sont constamment à la recherche de nouveaux composés possédant une image positive et bénéfique pour la santé, et susceptibles de modifier les propriétés fonctionnelles des milieux afin de fabriquer des produits possédant des textures variées.

C'est ainsi que la Demanderesse a réalisé d'importants travaux de recherche sur les Matières Protéiques Végétales (MPV) en tant qu'ingrédients alimentaires. Cet intérêt pour les MPV est tout d'abord dû à leurs nombreuses propriétés fonctionnelles, mais aussi à des qualités nutritionnelles intéressantes de par leur composition en acides aminés dits essentiels.

Par MPV on désigne dans la présente demande des ingrédients alimentaires obtenus à partir d'oléagineux, de légumineuses ou de céréales par réduction ou élimination de certains des principaux constituants non protéiques (eau, huile, amidon, autres glucides), de manière à obtenir une teneur protéique (N x 6,25) de 50% ou plus. La teneur protéique est calculée sur la base du poids sec à l'exclusion des vitamines et des sels minéraux.

Les MPV sont de plus en plus utilisées dans les applications alimentaires. Elles sont devenues un ingrédient important pour leurs propriétés foisonnantes, texturantes, émulsifiantes, épaississantes, stabilisantes, moussantes ou gélifiantes, sans cesse améliorées, pour une exploitation dans des applications connues ou encore tout simplement dans des créations totalement nouvelles.

Un des objets de la présente invention est donc de proposer des protéines végétales en remplacement des protéines animales, tout en permettant de conserver, au produit dans lequel elles sont utilisées, des propriétés fonctionnelles, une saveur et une palatabilité ainsi qu'une valeur nutritionnelle au moins similaires, voire améliorées. Le produit aura une valeur nutritionnelle équivalente :

- si sa qualité protéique n'est pas inférieure à celle du produit d'origine, et
- s'il renferme une quantité équivalente de protéines (N x 6,25) de sels minéraux et de vitamines à celle présente dans les produits d'origine animale.

Les protéines jouent un rôle majeur sur la qualité organoleptique de nombreux aliments frais ou manufacturés, comme par exemple la consistance et la texture de la viande et produits carnés, du lait et dérivés, des pâtes et du pain. Ces qualités des aliments dépendent très fréquemment de la structure et des propriétés physico-chimiques des composants protéiques ou tout simplement de leurs propriétés fonctionnelles.

Le terme propriétés fonctionnelles des ingrédients alimentaires signifie dans la présente demande toute propriété non nutritionnelle qui influence l'utilité d'un ingrédient dans un aliment. Ces diverses propriétés vont contribuer à l'obtention des caractéristiques finales désirées de l'aliment. Quelques unes de ces propriétés fonctionnelles sont la solubilité, l'hydratation, la viscosité, la coagulation, la stabilisation, la texturation, la formation de pâte, les propriétés moussantes et coagulantes.

Outre la substitution des protéines animales et de ce fait l'élimination de bien des désavantages liés à leur emploi, la Société Demanderesse s'est également concentrée sur la formulation de nouveaux ingrédients alimentaires prêts à l'emploi, contenant en plus des MPV d'autres composés présentant des propriétés fonctionnelles et/ou nutritionnelles différentes mais complémentaires.

En effet, de nos jours, dans un souci de rentabilité maximale, on assiste de plus en plus à une volonté de simplification des procédés de fabrication de la part des industriels, et tout particulièrement dans le secteur agroalimentaire.

Cette simplification des procédés de fabrication des produits alimentaires se traduit notamment par une réduction du nombre de composés utilisés, et notamment des ingrédients rentrant dans la préparation des produits finis. Cette réduction des ingrédients permet à la fois de limiter les temps de fabrication des produits, d'en simplifier les procédés et d'en réduire les coûts. Toutefois, elle ne doit pas en altérer la texture, ni les propriétés tant fonctionnelles, nutritionnelles, sensorielles qu'organoleptiques.

Toujours dans une volonté de simplifier les procédés de fabrication des produits alimentaires, les industriels émettent également de plus ne plus d'exigences quant à la forme desdits ingrédients utilisés. La forme sèche est de loin la forme préférée des industriels, tant sur le plan de la conservation, du stockage et de la manutention, par rapport à une forme liquide par exemple, beaucoup moins stable dans le temps. Et pourtant l'utilisation d'ingrédients sous forme pulvérulente présente le désavantage que ces produits présentent parfois des difficultés à se dissoudre, ce qui peut entraîner des phénomènes de décantation, une mauvaise dispersibilité avec formation de grumeaux et donc de répartition non uniforme des ingrédients au cours de procédé. Qui plus est, la manipulation de produits pulvérulents pose des problèmes de sécurité dus, entres autres, aux résidus secs que les manipulateurs peuvent respirer, avec également des risques d'incendies et d'explosion.

De tout ce qui précède, il résulte qu'il existe un réel besoin, non satisfait, de disposer d'une composition employée comme un substitut des protéines d'origine animale, possédant plusieurs propriétés fonctionnelles intéressantes lui permettant de réduire le nombre d'additifs employés dans la fabrication d'un produit fini tout en lui assurant des caractéristiques technologiques similaires à celles obtenues en employant séparément lesdits additifs, et se présentant sous une forme sèche mais non pulvérulente, pouvant être facilement hydratée.

Forte de ce constat et après de nombreux travaux de recherche, la Société Demanderesse a eu le mérite de concilier tous ces objectifs réputés jusqu'alors difficilement conciliables en proposant une nouvelle composition contenant entre autre des protéines végétales, caractérisée en ce qu'elle:

- associe une protéine végétale et une fibre végétale, possédant elle-même, une caractéristique fonctionnelle, et/ou une caractéristique nutritionnelle, et/ou une caractéristique technologique intéressante et recherchée,
- se présente sous forme sèche mais non pulvérulente, c'est-à-dire sous forme granulaire, on parle de poudre granulée,
- présente une teneur en matière sèche supérieure à 80%, de préférence supérieure à 85%, et encore plus préférentiellement supérieure à 90%,
- présente un caractère « instant », c'est-à-dire que cette poudre granulée présente de très bonnes mouillabilité, dispersibilité et solubilité dans l'eau.

Ladite poudre granulée est caractérisée par le fait qu'elle présente, par rapport aux simples mélanges physiques de poudre décrits dans l'art antérieur, une meilleure dispersion dans l'eau et une meilleure dissolution à froid, une meilleure coulabilité pour les opérations de dosage, et qu'elle offre un meilleur environnement pour la manutention des poudres par l'absence de poussières. Qui plus est, cette poudre granulée présente des caractéristiques fonctionnelles améliorées, que le simple mélange physique des différents constituants n'aurait pas permis d'obtenir.

RESUME DE L'INVENTION

La présente invention a donc pour objet une poudre granulée comprenant au moins une protéine d'origine végétale et au moins une fibre d'origine végétale, caractérisée en ce qu'elle présente un diamètre moyen volumique laser D4,3 compris entre $10\mu m$ et $500\mu m$, de préférence entre $50\mu m$ et $350\mu m$ et encore plus préférentiellement entre $70\mu m$ et $250\ \mu m$, et une matière sèche, déterminée après étuvage à 130°C pendant 2 heures, supérieure à 80%, de préférence supérieure à 85%, et encore plus préférentiellement supérieure à 90%, caractérisée en ce que la protéine d'origine végétale est une protéine de pois et la fibre d'origine végétale est une maltodextrine branchée.

La présente invention concerne également le procédé d'obtention de cette poudre granulée ainsi que son utilisation dans différents secteurs industriels, et plus particulièrement dans le secteur agroalimentaire où elle est utilisée en tant qu'agent fonctionnel tel qu'agent émulsifiant, foisonnant, stabilisant, épaississant et/ou gélifiant, notamment en substitution de tout ou partie de certaines protéines animales dans la préparation de produits alimentaires.

DESCRIPTION DETAILLEE DES MODES DE REALISATION

La présente invention est relative à une poudre granulée comprenant au moins une protéine végétale et au moins une fibre végétale, caractérisée en ce qu'elle présente un diamètre moyen volumique laser D4,3 compris entre $10\mu m$ et $500\mu m$, de préférence entre $50\mu m$ et $350\mu m$ et encore plus préférentiellement entre $70\mu m$ et $250\,\mu m$, et une matière sèche, déterminée après étuvage à 130°C pendant 2 heures, supérieure à 80%, de préférence supérieure à 85%, et encore plus préférentiellement supérieure à 90%, caractérisé en ce que la protéine d'origine végétale est une protéine de pois et la fibre d'origine végétale est une maltodextrine branchée.

Ladite poudre granulée peut être caractérisée en ce que le ratio pondéral de la protéine végétale à la fibre végétale est compris entre 99 :1 et 1:99, de préférence entre 80 :20 et 20 :80, plus préférentiellement encore entre 65 :35 et 35 :65 et en particulier entre 55 :45 et 45 :55.

Dans la présente invention, ladite poudre granulée est caractérisée en ce que la somme des quantités de protéine végétale et de fibre végétale est comprise entre 30 et 100%, et de préférence entre 50 et 100% de la masse totale de ladite poudre granulée (sec/sec).

Le terme « pois » étant ici considéré dans son acception la plus large et incluant en particulier :

- toutes les variétés sauvages de « pois lisse » (« smooth pea ») et « de pois ridés » (« wrinkled pea »), et
- toutes les variétés mutantes de « pois lisse » et de « pois ridé » et ce, quelles que soient les utilisations auxquelles on destine généralement lesdites variétés (alimentation humaine, nutrition animale et/ou autres utilisations).

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

De manière encore plus préférentielle, ladite protéine de légumineuse est le pois lisse.

En effet, le pois est la légumineuse à graines riches en protéines qui, depuis les années 70, s'est le plus développée en Europe et principalement en France, non seulement comme source protéique pour l'alimentation animale, mais aussi pour l'alimentation humaine.

Les protéines de pois sont constituées, comme toutes les protéines de légumineuses, de trois classes de protéines principales: les globulines, les albumines et les protéines dites « insolubles ».

L'intérêt des protéines de pois réside dans leurs bonnes capacités émulsifiantes, leur absence d'allergènicité, et leur faible coût, ce qui en fait un ingrédient fonctionnel économique.

De plus, les protéines de pois participent favorablement au développement durable et leur impact carbone est très positif. En effet, la culture du pois est respectueuse de l'environnement, et ne nécessite pas d'engrais azotés, car le pois fixe l'azote de l'air.

En outre, sous forme native globulaire, les protéines de pois sont solubles dans l'eau, ce qui permet d'envisager de les incorporer dans des émulsions.

Par protéine de pois, on désigne, de manière préférée selon la présente invention, les protéines de pois qui sont principalement sous forme native, globulaire, globulines, ou albumines.

De manière encore plus préférentielle, les protéines de pois utilisées selon l'invention sont sous forme d'une composition de protéine de pois présentant :

- une teneur en protéines totales (N x 6,25), exprimée en grammes de produit sec, d'au moins 60% en poids de produit sec. De préférence, on utilise dans le cadre de la présente invention une composition de protéine ayant une teneur en protéines élevée comprise entre 70% et 97% en poids de produit sec, de préférence entre 76% et 95%, plus préférentiellement encore comprise entre 78% et 88%, et en particulier comprise entre 78% en 85%,
- une teneur en protéines solubles, exprimée selon un test de mesure de la solubilité dans l'eau des protéines, comprise entre 20 et 99%. De préférence, on utilise dans le cadre de la présente invention une protéine ayant un taux élevé de protéines solubles compris entre 45 et 90%, plus préférentiellement encore entre 50 et 80%, et en particulier entre 55 et 75%.

Pour déterminer le taux de protéines totales, on peut effectuer le dosage de la fraction azotée soluble contenue dans l'échantillon selon la méthode de Kjeldahl, puis on obtient le taux de protéines totales en multipliant le taux d'azote exprimé en pourcentage de poids de produit sec par le facteur 6,25. Cette méthode est bien connue de l'homme du métier.

Dans la présente invention, le taux de protéines totales peut également être mesuré par le dosage de la fraction azotée soluble contenue dans l'échantillon selon la méthode de Dumas A., 1831, Annales de chimie, 33, 342, comme cité par Buckee, 1994, dans Journal of the Institute of Brewing, 100, pp 57-64, puis on obtient le taux de protéines totales en multipliant le taux d'azote exprimé en pourcentage de poids de produit sec par le facteur 6,25. Cette méthode, également connue comme méthode de dosage de l'azote par combustion, consiste en une combustion totale de la matrice organique sous oxygène. Les gaz produits sont réduits par du cuivre puis desséchés et le gaz carbonique est piégé. L'azote est ensuite quantifié à l'aide d'un détecteur universel. Cette méthode est bien connue de l'homme du métier.

Pour déterminer le taux de protéines solubles, on mesure la teneur en protéines solubles dans l'eau dont le pH est ajusté à 7,5 +/- 0,1 à l'aide d'une solution de HCl ou NaOH, par une méthode de dispersion d'une prise d'essai de l'échantillon dans de l'eau distillée, centrifugation et analyse du surnageant. Dans un bécher de 400 ml, on introduit 200,0 g d'eau distillée à 20°C +/- 2°C, et on place le tout sous agitation magnétique (barreau aimanté et rotation à 200 rpm). On ajoute exactement 5 g de l'échantillon à analyser. On agite pendant 30 min, et on centrifuge pendant 15 min à 4.000 rpm. On réalise, sur le surnageant la méthode de détermination de l'azote selon la méthode précédemment décrite.

Ces compositions de protéines végétales, et en particulier de protéines de pois, présentent de manière préférée plus de 50, 60, 70, 80 ou 90 % de protéines de plus de 1.000 Da. En outre, ces compositions de protéines végétales, et en particulier de protéines de pois présentent de manière préférée un profil de distribution des poids moléculaires constitué de :

- 1 à 8%, de préférence de 1,5 à 4%, et plus préférentiellement encore de 1,5 à 3% de protéines de plus de 100.000 Da,
- 20 à 55%, de préférence de 25 à 55% de protéines de plus de 15.000 et d'au plus de 100.000 Da,
- 15 à 30% de protéines de plus de 5.000 et d'au plus de 15.000 Da,
- et de 25 à 55%, de préférence de 25 à 50%, et plus préférentiellement encore de 25 à 45% de protéines d'au plus de 5.000 Da.

La détermination des poids moléculaires des protéines constitutives desdites compositions de protéines de pois est réalisée par chromatographie d'exclusion stérique en conditions dénaturantes (SDS + 2-mercaptoéthanol) ; la séparation se fait en fonction de la taille des molécules à séparer, les molécules de taille élevée étant éluées en premier.

Des exemples de compositions de protéines de pois selon l'invention, ainsi que le détail de la méthode de détermination des poids moléculaires peuvent être trouvés dans le brevet WO 2007/017572 dont la Société Demanderesse est également titulaire.

Selon la présente invention, les dites protéines végétales, et en particulier de pois, utilisées pour l'obtention de la poudre granulée peuvent également être des « concentrats de protéines végétales » ou des « isolats de protéines végétales », de préférence des « concentrats de protéines de pois » ou des « isolats de protéines de pois ». Les concentrats et les isolats de protéines végétales, et en particulier de pois, sont définis en regard de leur contenu en protéines (cf. la revue de J. GUEGUEN de 1983 dans Proceedings of european congress on plant proteins for human food (3-4) pp 267 - 304) :

- les concentrats de protéines végétales, et en particulier de pois, sont décrits comme présentant un contenu en protéines totales de 60 à 75 % sur sec, et
- les isolats de protéines végétales, et en particulier de pois, sont décrits comme présentant un contenu en protéines totales de 90 à 95 % sur sec,

les teneurs en protéines étant mesurées par la méthode de Kjeldhal (cf. ci-avant), la teneur en azote étant multiplié par le facteur 6,25.

Dans un autre mode de réalisation de la présente invention, les compositions de protéines de pois, pouvant être utilisées peuvent également être des « hydrolysats de protéines végétales », de préférence « hydrolysats de protéines de pois ». Les hydrolysats de protéines végétales, et en particulier de pois, sont définis comme des préparations obtenues par hydrolyse par voie enzymatique, par voie chimique, ou par les deux voies simultanément ou successivement, de protéines végétales, et en particulier de pois. Les hydrolysats de protéines se composent d'un mélange de peptides de différentes tailles et d'acides aminés libres. Cette hydrolyse peut avoir un impact sur la solubilité des protéines. L'hydrolyse enzymatique et/ou chimique est par exemple décrite dans la demande de brevet WO 2008/001183. De préférence, l'hydrolyse de protéines n'est pas complète, c'est-à-dire ne résulte pas en une composition comprenant uniquement ou essentiellement des acides aminés et des petits peptides (de 2 à 4 acides aminés). Ainsi, les hydrolysats selon l'invention ne sont pas des compositions HPV. Les hydrolysats préférés comprennent plus de 50, 60, 70, 80 ou 90 % de protéines de plus de 500 Da.

Les procédés de préparation d'hydrolysats de protéines sont bien connus de l'homme du métier et peuvent par exemple comprendre les étapes suivantes : dispersion des protéines dans l'eau pour obtenir une suspension, hydrolyse de cette suspension par le traitement choisi. Le plus souvent, il s'agira d'un traitement enzymatique combinant un mélange de différentes protéases, éventuellement suivi d'un traitement thermique destiné à inactiver les enzymes encore actives. La solution obtenue peut ensuite être filtrée sur une ou plusieurs membranes de façon à séparer les composés insolubles, éventuellement l'enzyme résiduelle et les peptides de haut poids moléculaire (supérieur à 10 000 daltons).

Dans un mode de réalisation préféré, les protéines végétales comprises dans la poudre granulée sont dénuées de gluten. Ce mode de réalisation est avantageux puisqu'il existe un certain nombre de personnes présentant une intolérance au gluten.

Le gluten est un groupe de protéines présentes dans les céréales, particulièrement dans le blé, mais également dans le seigle, l'orge, et l'avoine. Le gluten est, pour la plupart des personnes, une protéine normale qui est facilement digérée par l'intermédiaire de l'estomac. Cependant, une petite partie de la population est incapable de digérer le gluten. Ces personnes intolérantes au gluten sont désignées le plus généralement comme souffrant de la maladie coeliaque (aussi appelée psilosis coeliaque, entéropathie intolérante au gluten, ou entéropathie sensible au gluten). Cette maladie apparait lorsqu'il y a une réaction chronique contres certaines chaînes protéiques présentes dans certaines céréales. Cette réaction engendre la destruction des villosités intestinales de l'intestin grêle, ce qui cause la malabsorption des nutriments et d'autres troubles plus ou moins graves. C'est une maladie très contraignante contre laquelle il n'existe malheureusement à ce jour aucun traitement curatif. Selon la présente invention, la poudre granulée comprend au moins une protéine végétale et au moins une fibre végétale.

Dans la présente invention, le terme « fibre végétale » désigne les fibres alimentaires végétales solubles et/ou insolubles. Ces dernières ne désignent pas seulement les matières fibreuses au sens strict, mais également toute une série de composés différents qui sont contenus presque exclusivement dans les aliments d'origine végétale et qui présentent la propriété commune de ne pouvoir être décomposés par les enzymes digestives de l'homme. Presque toutes les fibres alimentaires sont des polymères glucidiques. Depuis quelques années, les nutritionnistes se sont intéressés à un nouveau type de fibres alimentaires : l'amidon résistant. Il s'agit d'un amidon ou d'une fraction d'amidon qui n'est pas digérée dans l'intestin grêle et qui est fermentée par les bactéries du colon.

A la différence des fibres végétales traditionnelles, ces amidons présentent l'avantage de ne pas modifier l'apparence du produit dans lequel ils sont incorporés et constituent en quelque sorte une source de fibres invisible à l'oeil nu. Ces amidons sont préconisés dans de nombreuses applications.

Ainsi, la fibre végétale est choisie parmi les fibres solubles, les fibres insolubles et leurs mélanges quelconques.

Selon un mode de réalisation avantageux de la présente invention, la poudre granulée comprend des protéines de pois et au moins une fibre végétale soluble.

Ladite fibre soluble d'origine végétale est choisie dans le groupe constitué parmi les maltodextrines branchées.

Par fibre soluble, on entend des fibres solubles dans l'eau. Les fibres peuvent être dosées selon différentes méthodes AOAC. On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

Selon un mode de réalisation particulièrement avantageux de la présente invention, la poudre granulée comprend des protéines de pois associées à des fibres végétales solubles qui sont des maltodextrines branchées.

On entend par maltodextrines branchées (MDB), les maltodextrines spécifiques identiques à celles décrites dans le brevet EP 1.006.128-B1 dont la Demanderesse est titulaire. Ces MDB ont l'avantage de représenter une source de fibres indigestibles bénéfiques pour le métabolisme et pour l'équilibre intestinal. En particulier, on pourra utiliser des MDB présentant entre 15 et 35% de liaisons glucosidiques 1-6, une teneur en sucres réducteurs inférieure à 20%, une masse moléculaire moyenne en poids MW comprise entre 4000 et 6000 g/mole et une masse moléculaire moyenne en nombre Mn comprise entre 250 et 4500 g/mole.

Certaines sous-familles de MDB décrites dans la susdite demande peuvent aussi être utilisées conformément à l'invention. Il s'agit par exemple de MDB de hauts poids moléculaires présentant une teneur en sucres réducteurs au plus égale à 5 et un Mn compris entre 2000 et 4500 g/mole. Les MDB de bas poids moléculaires présentant une teneur en sucres réducteurs comprise entre 5 et 20% et une masse moléculaire Mn inférieure à 2000 g/mole peuvent également être employées.

Un exemple d'association avec une protéine végétale particulièrement intéressante est l'utilisation de NUTRIOSE®, qui est une gamme complète de fibres solubles, reconnues pour leurs bienfaits, et fabriquées et commercialisées par la Demanderesse. Les produits de la gamme NUTRIOSE® sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE® est l'une des fibres les mieux tolérées disponibles sur le marché. Elle montre une tolérance digestive plus élevée, permettant une meilleure incorporation que d'autres fibres, ce qui représente de vrais avantages alimentaires.

La poudre granulée peut contenir des protéines végétales associées à des fibres végétales insolubles.

Selon un mode de réalisation, la poudre granulée comprend des protéines de pois et au moins une fibre végétale insoluble.

De préférence, ladite fibre végétale insoluble est choisie dans le groupe constitué par les amidons résistants, les fibres de céréales, les fibres de fruits, les fibres de légumes, les fibres de légumineuses et leurs mélanges.

On peut citer par exemple des fibres telles que les fibres de bambou, de pois ou de carotte.

Selon une première variante, ladite poudre comprend des protéines de pois et au moins une fibre végétale insoluble, et de préférence une fibre de légumineuse, et encore plus préférentiellement une fibre de pois.

Selon une seconde variante, la fibre végétale insoluble est un amidon résistant. On pourra utiliser indifféremment les amidons résistants naturels ou les amidons résistants obtenus par modification chimique, et/ou physique, et/ou enzymatique.

Selon la présente invention, on désigne par amidon résistant, un amidon ou une fraction d'amidon qui n'est pas digérée dans l'intestin grêle et qui est fermentée par les bactéries du colon. Quatre catégories d'amidon résistant ont été identifiées :

- les amidons encapsulés, présents dans la plupart des aliments végétaux non raffinés tels que les légumes secs, qui sont inaccessibles aux enzymes (RS1)
- l'amidon granulaire de certains aliments crus comme la banane ou la pomme de terre et les amidons riches en amylose (RS2)
- les amidons rétrogradés, que l'on trouve dans les aliments cuits puis réfrigérés ou congelés (RS3)
- les amidons modifiés par voie chimique comme en particulier les amidons éthérifiés ou estérifiés (RS4).

Les amidons résistants proposés notamment par la société NATIONAL STARCH tels que ceux commercialisés sous l'appellation HI-MAIZE®, sont issus de variétés de maïs riches en amylose et se comportent comme des fibres insolubles. Des amidons résistants de type RS3 sont également proposés sous l'appellation NOVELOSE®.

Ces amidons résistants diminuent la réponse glycémique, améliorent la santé du système digestif grâce à leurs propriétés prébiotiques et contribuent à la régularité du transit, sans être à haute valeur calorique.

Selon une troisième variante, la fibre végétale insoluble comprend un mélange d'au moins un amidon résistant et d'une fibre de pois.

De préférence, on utilisera un amidon résistant issu d'amidon ayant une teneur en amylose supérieure à 50%. Les amidons riches en amylose EURYLON® commercialisés par la Demanderesse conviennent particulièrement.

Selon un autre aspect, la poudre granulée comprend des protéines de pois et un mélange de fibres solubles et insolubles.

De façon avantageuse, les fibres solubles sont des maltodextrines branchées lorsque les fibres insolubles sont choisies parmi les fibres de légumineuses et les amidons résistants, ou sont un mélange des deux.

Dans le cadre de la présente invention, l'expression « poudre granulée » signifie qu'il existe un mélange intime entre les différents composants de cette poudre, que leur répartition au sein de la poudre est sensiblement homogène, et que ceux-ci ne sont pas uniquement liés entre eux par un simple mélange physique. Des interactions entre les constituants peuvent survenir, aussi bien à l'extérieur de la particule qu'à l'intérieur. Notamment, chaque grain de ladite poudre granulée comprend à la fois des protéines végétales et des fibres végétales.

Dans un mode de réalisation particulier, la poudre granulée n'est pas enrobée.

Dans un autre mode de réalisation particulier, la poudre granulée ne comprend pas de gluten.

Par opposition, dans la présente invention, l'expression « simple mélange » signifie qu'il n'existe pas de mélange intime entre les différents constituants, et qu'il n'y a eu qu'un simple mélange physique par contact. Il n'y a aucune interaction entre les constituants car ils ne sont quasiment pas en contact entre eux. Notamment, dans un simple mélange, certaines particules de la poudre seront constituées de protéines végétales alors que d'autres particules de celle-ci seront constituées des fibres végétales.

En effet, pour obtenir ladite poudre granulée, la Société Demanderesse a constaté qu'il convenait d'employer un mélange d'au moins une protéine végétale et d'au moins une fibre végétale, et de modifier ses caractéristiques physiques en employant un procédé approprié, de telle sorte que l'on obtienne simultanément des propriétés fonctionnelles très intéressantes ne pouvant être obtenues si chaque composé est utilisé séparément ou si les composés sont utilisés simultanément mais sous la forme d'un simple mélange de poudres.

Dans la présente invention, ladite poudre granulée est préparée par un procédé de séchage selon une technique choisie dans le groupe constitué par l'atomisation, la granulation, l'extrusion ou par tout autre moyen de séchage connu de l'homme du métier, et dans des conditions adaptées à l'équipement choisi, susceptible de permettre l'obtention d'une poudre granulée selon l'invention.

Ainsi, la présente invention vise également un procédé de fabrication de la susdite poudre granulée. Ledit procédé de fabrication consiste à sécher conjointement au moins deux constituants, et comprend une étape de mise en contact intime d'au moins une protéine végétale avec au moins une fibre végétale, ces étape de mise en contact intime pouvant être menées selon toute méthode connue de l'homme du métier, et notamment selon une technique choisie parmi l'atomisation, la granulation et l'extrusion, et toute combinaison d'au moins deux de ces techniques, telle que ladite étape de mise en contact intime conduise à une matière sèche déterminée après étuvage à 130°C pendant 2 heures, supérieure à 80%, de préférence supérieure à 85%, et encore plus préférentiellement supérieure à 90%, caractérisée en ce que la protéine d'origine végétale est une protéine de pois et la fibre d'origine végétale est une maltodextrine branchée. A titre d'exemple, on citera un procédé de fabrication de ladite poudre granulée selon une unique technique d'atomisation, ou selon une unique technique de granulation, ou encore selon une combinaison entre une technique d'atomisation suivie d'une technique de granulation.

Ainsi, selon une première variante de l'invention, ladite poudre granulée est susceptible d'être obtenue selon un procédé de fabrication qui comprend une étape d'atomisation d'une suspension d'au moins une protéine végétale et d'au moins une fibre végétale, ladite étape d'atomisation étant suivie par une étape de granulation de la poudre « atomisée » sur un granulateur. Selon cette première variante, une suspension à atomiser est préparée, contenant au moins une protéine de pois, et au moins une maltodextrine branchée, dans les proportions requises. Toujours selon cette variante, on peut également envisager de préparer une suspension aqueuse à atomiser par constituant.

Toujours selon cette variante, la suspension à atomiser peut être préparé soit à partir d'une composition sèche de protéines végétale, et de préférence à partir d'une composition sèche de protéines de pois, i.e. sous la forme d'une poudre qui est ensuite diluée dans de l'eau, soit à partir d'un floc de protéines végétales, et de préférence de protéines de pois. Dans cette deuxième alternative, le floc de protéines de pois, est obtenu après broyage de la farine de pois, remise de cette farine broyée en suspension dans l'eau, puis fractionnement de ladite suspension par tout moyen connu par ailleurs de l'homme du métier, de manière à isoler une fraction riche en protéines. Puis, les protéines sont isolées de cette fraction par une technique choisie dans le groupe des techniques de précipitation des protéines à leur pH isoélectrique et des techniques de séparation membranaire de type ultrafiltration. Enfin, la séparation du précipité (encore appelé " floc ") renfermant les protéines solubles s'effectue sur décanteur centrifuge ou en séparatrice à assiettes. Le floc peut être utilisé tel quel ou mis en suspension, selon sa matière sèche.

L'étape d'atomisation est une opération unitaire de séchage qui consiste à transformer en poudre un liquide, pulvérisé sous forme de gouttelettes mises en contact avec un gaz chaud. Cette opération détermine la taille des gouttelettes produites (et leur granulométrie), leur trajectoire, leur vitesse et par conséquent la dimension finale des particules sèches, ainsi que les propriétés des poudres obtenues : écoulement, caractère instant lié à leur solubilité, densité, comprimabilité, friabilité,...

L'étape d'atomisation peut être réalisée dans un atomiseur ou une tour d'atomisation, dans laquelle ladite suspension (ou les suspensions) à sécher est divisée dans un courant de gaz chaud qui apporte les calories nécessaires à l'évaporation du solvant et absorbe, pour l'évacuer, l'humidité libérée par le produit en cours de séchage. Le mélange liquide est admis au sommet par une buse ou une turbine, la poudre « atomisée » obtenue est récoltée à la base de la tour. Le solide sec est séparé du gaz d'atomisation par un (ou des) cyclone(s), ou par filtration (filtre à manches par exemple). Dans certains cas, si cela s'avère nécessaire, la tour peut être remplie d'un gaz inerte pour éviter les phénomènes d'oxydation.

L'étape de granulation a lieu après l'étape d'atomisation, et consiste à la pulvérisation d'une solution aqueuse sur la poudre issue de l'étape d'atomisation. Une telle opération, réunissant une étape d'atomisation suivie d'une étape de granulation, est classiquement mise en oeuvre dans un atomiseur multiples effets comme par exemple une Tour MSD (pour Multi-Stage Dryer).

Selon un mode de réalisation préférentiel de cette première variante, on peut procéder selon les étapes suivantes :

1) préparer à une température comprise entre 15 et 70°C, et de préférence entre 15 et 50°C une suspension de protéines de pois et de maltodextrines branchées, dans laquelle :

- lesdites protéines de pois possèdent une teneur en protéines solubles comprise entre 20 et 99%, de préférence entre 45 et 90%, plus préférentiellement encore entre 50 et 80%, et en particulier entre 55 et 75% ;
- lesdites maltodextrines branchées présentent entre 15 et 35% de liaisons glucosidiques 1-6, une teneur en sucres réducteurs inférieure à 20%, un poids moléculaire MW compris entre 4000 et 6000 g/mole et une masse moléculaire moyenne en nombre Mn comprise entre 250 et 4000 g/mole.
- le ratio pondéral des protéines de pois aux maltodextrines branchées est compris entre 99 :1 et 1 :99, de préférence entre 80 :20 et 20 :80, plus préférentiellement encore entre 65 :35 et 35 :65 et en particulier entre 55 :45 et 45 :55 ;
- la matière sèche de la suspension est comprise entre 25 et 50%, de préférence entre 30 et 40%,

1') réaliser une première étape optionnelle de traitement thermique à température élevée et pendant un temps court afin de réduire les risques bactériologiques de la suspension obtenue selon 1, ledit traitement pouvant être choisi parmi les traitements HTST (High Temperature Short Time), UHT ;
1") réaliser une seconde étape optionnelle, d'homogénéisation à haute pression de la suspension obtenue selon 1), et indépendamment de la première étape optionnelle ;

2) maintenir ou ramener en cas de réalisation de l'étape 1') ladite suspension de protéines de pois et de maltodextrines branchées à une température comprise entre 15 et 80°C, et de préférence entre 15 et 50°C ;
3) atomiser ladite suspension dans une tour d'atomisation de type MSD équipée d'une buse d'atomisation haute pression avec recyclage des fines particules en tête de tour ;
4) granuler dans ladite tour d'atomisation ;
5) récupérer la poudre granulée ainsi obtenue et comprenant les protéines de pois et les maltodextrines branchées.

Comme il sera exemplifié ci-après, la société Demanderesse recommande d'utiliser une tour de type MSD 20 commercialisée par la société NIRO.

La buse d'injection est choisie de manière à obtenir une pression comprise entre 50 et 300 bars, de préférence de l'ordre de 150 bars, pour un débit compris entre 100 et 150 l/h, de préférence de l'ordre de 120 l/h.

La température des airs d'entrée sont réglées de la manière suivante :

- pour l'air d'entrée en amont de la tête de tour : température comprise entre 150 et 180°C, de préférence 155°C,
- pour le lit fluidisé statique : température comprise entre 50 et 120°C, de préférence 84°C,
- pour le lit fluidisé vibré : température de l'ordre de 20°C.

La température de sortie est alors comprise entre 55 et 80°C, de l'ordre de 60°C.

La poudre granulée selon l'invention, contenant des cogranulés, est enfin récupérée en sortie de tour d'atomisation.

Selon une seconde variante de l'invention, ladite poudre granulée est obtenue selon un unique procédé de granulation qui permet de réaliser l'étape de mise en contact intime entre les différents constituants. Le procédé de granulation peut faire appel à deux techniques bien connues par l'homme du métier : la technique de granulation par voie sèche et la technique de granulation par voie humide.

Selon un mode préférentiel de cette seconde variante, la poudre granulée est obtenue par granulation par voie humide dans un lit fluidisé. Un exemple d'une telle granulation est par exemple cité dans le brevet EP 1 558 094 dont la demanderesse est titulaire.

Selon une troisième variante de l'invention, ladite poudre granulée est obtenue selon un unique procédé d'extrusion. Dans ce procédé, on utilisera une installation comportant au moins une filière d'extrusion, les paramètres de températures étant sélectionnés aisément par l'homme du métier en fonction de la teneur en eau de la composition avant séchage. La composition extrudée est ensuite successivement soumise à un refroidissement, à un broyage, et éventuellement un tamisage pour conduire à la poudre atomisée selon la présente invention.

Par la mise en oeuvre des procédés de séchage décrits précédemment, ou par tout autre moyen de séchage connu de l'homme du métier et dans des conditions adaptées à l'équipement choisi, on obtient une poudre granulée composée de cogranulés et contenant les différents composés de départ liés entre eux de façon intime.

Dans un mode de réalisation préférée de l'invention, le procédé de préparation de la poudre granulée de l'invention ne nécessite pas l'utilisation d'émulsifiant, et notamment de lécithine ou dérivés de celle-ci ou des mono et di-glycérides d'acides gras alimentaires (E471, E472c, etc.). En effet, les protéines de pois présentent l'avantage de présenter des capacités émulsifiantes intrinsèques permettant de s'en dispenser. Ainsi, la présente invention est relative en particulier à une poudre granulée selon l'invention ne comprenant pas d'émulsifiant autre que les protéines de pois, de préférence ne comprenant pas de lécithine ou dérivés de celle-ci.

La taille moyenne de la poudre obtenue conformément à l'invention peut être caractérisée par son diamètre moyen volumique (moyenne arithmétique) D 4,3. Il est compris entre $10 \mu m$ et $500 \mu m$, de préférence entre $50 \mu m$ et $350 \mu m$ et encore plus préférentiellement entre $70 \mu m$ et $250 \mu m$.

Selon un mode préférentiel, le diamètre moyen volumique D4,3 de la dite poudre granulée est compris entre $150 \mu m$ et $240 \mu m$.

Ces valeurs sont déterminées sur un granulomètre à diffraction LASER type LS 230 de la société BECKMAN-COULTER, équipé de son module de dispersion poudre (voie sèche), en suivant le manuel technique et les spécifications du constructeur. La gamme de mesure du granulomètre à diffraction LASER type LS 230 est de $0,04 \mu m$ à $2.000 \mu m$.

Selon un mode particulier de la présente invention, 90% de la poudre a un diamètre inférieure à $1000 \mu m$, de préférence inférieur à $500 \mu m$, et plus préférentiellement encore inférieur à $400 \mu m$. En particulier, 90% de la poudre a un diamètre inférieur à $370 \mu m$. Cette valeur correspond au $d_{90}$.

Selon un autre mode particulier de la présente invention, 50% de la poudre a un diamètre inférieur à 500μm, de préférence inférieur à 300μm, et plus préférentiellement encore inférieur à 250μm. En particulier, 50% de la poudre a un diamètre inférieur à 220μm. Cette valeur correspond au $d_{50}$.

Selon un autre mode particulier de la présente invention, 10% de la poudre a un diamètre inférieur à 300μm, de préférence inférieur à 200μm, et plus préférentiellement encore inférieur à 150μm. En particulier, 10% de la poudre a un diamètre inférieur à 100μm. Cette valeur correspond au $d_{10}$.

Ces trois valeurs $d_{90}$, $d_{50}$ et $d_{10}$ sont également déterminées à l'aide du granulomètre à diffraction LASER utilisé pour la détermination du diamètre moyen volumique D 4,3.

Selon un mode préférentiel, la poudre granulée est constituée de protéine de pois et de fibres.

Selon un autre mode préférentiel, la poudre granulée contient des protéines de pois associées à un mélange d'au moins deux fibres choisies parmi les fibres solubles et insolubles.

De façon avantageuse, les fibres solubles sont des maltodextrines branchées lorsque les fibres insolubles sont choisies parmi les fibres de légumineuses et les amidons résistants, ou sont un mélange des deux.

La poudre granulée peut contenir des proportions de protéines végétales et de fibres végétales variables.

Selon un mode préférentiel, le ratio pondéral de la protéine végétale, et de préférence de la protéine de pois, à la fibre est compris entre 90 :10 et 10 :90, de préférence entre 75 :25 et 25 :75, plus préférentiellement entre 65 :35 et 35 :65. En particulier, ledit ratio est compris entre 60 : 40 et 45 : 55, de préférence entre 55 :45 et 45 :55.

Selon un autre mode préférentiel, la somme des quantités de protéines végétales, et de préférence de protéines de pois, et de fibres est comprise entre 30 et 100%, et de préférence entre 50 et 100%, de la masse totale de ladite poudre granulée (sec/sec).

La Société Demanderesse a eu le mérite de découvrir qu'en fonction de ces ratios, les propriétés fonctionnelles de la poudre pouvaient être différentes.

Dans un mode de réalisation selon l'invention, il a été observé de manière inattendue que dans le domaine alimentaire par exemple, la poudre granulée selon la présente invention présente l'avantage complémentaire de se substituer totalement ou partiellement aux matières grasses couramment utilisées dans les recettes.

Selon un autre mode de réalisation, la poudre granulée comprend des protéines de pois et des fibres végétales, et peut de plus contenir tout additif approprié, comme des arômes, des colorants, des agents stabilisants, des excipients, des lubrifiants, des conservateurs, dès lors qu'ils n'impactent pas de façon négative les propriétés fonctionnelles finales recherchées,

Il peut également s'agir de principes actifs pharmaceutiques ou phytosanitaires, de détergents. On entend par principe actif, dans la présente invention, toute molécule active possédant un effet pharmacologique démontré et un intérêt thérapeutique également démontré cliniquement.

Ladite poudre granulée peut, en outre, être également caractérisée par sa masse volumique apparente, déterminée selon la méthode de mesure préconisée par la Pharmacopée Européenne (PE 5.1 tome 1, 01/2005 : 20915 paragraphe 2-9-15 ; équipement selon la figure 2-9-15-1).

Dans ces conditions, ladite poudre granulée présente avantageusement une masse volumique apparente comprise entre 0,30 et 0,90 g/ml, de préférence comprise entre 0,40 et 0,60 g/ml.

Une autre propriété fonctionnelle de la poudre granulée conforme à l'invention est de posséder une excellente mouillabilité, bien meilleure que la mouillabilité mesurée pour le simple mélange. Cette caractéristique est la capacité d'absorption d'eau à la surface d'une poudre. Elle est proportionnelle à la solubilité de la poudre et inversement proportionnelle à la formation de grumeaux. Une grande mouillabilité permet de conférer le caractère dit « instant » à la poudre granulée de la présente invention.

Pour mesurer cette mouillabilité, on utilise un bécher haut de contenance 500 ml dans lequel on introduit 250 g d'eau distillée à 20°C +/- 2°C. On pèse exactement 25 g d'une poudre granulée conforme à l'invention ou 25 g du simple mélange. A t=0h on introduit rapidement et en une seule fois les 25 g d'échantillon et on déclenche le chronomètre. On mesure le temps nécessaire pour que l'échantillon se mouille complètement, c'est-à-dire pour qu'il ne reste plus d'échantillon sous forme sèche. Le test est réalisé sans agitation et sous agitation douce à 250 rpm. Dans le test sans agitation, la poudre granulée conforme à la présente invention se mouille en moins d'une minute, de préférence en moins de 30 secondes et plus préférentiellement encore en moins de 10 secondes, alors que le simple mélange met plus d'une heure pour se mouiller totalement.

Dans le test sous agitation douce, ladite poudre granulée se mouille en moins de 30 s, de préférence en moins de 10 s et plus préférentiellement encore en moins de 6 s, alors que le simple mélange met plus de 7 minutes pour se mouiller totalement.

En particulier, et à titre d'exemple, selon le test de mouillabilité sans agitation décrit ci-dessus, une poudre granulée composée de protéines de pois et de maltodextrines branchées se mouille en moins de 10 secondes, très exactement en 8,8 secondes alors que le simple mélange met 3h45s pour se mouiller totalement. Sous agitation douce, la poudre granulée se mouille en 4,3s alors que le simple mélange se mouille en 11 min 20 s.

Ce test permet de démontrer que la poudre granulée possède un caractère dit « instant » en comparaison du simple mélange qui lui n'en possède pas.

La poudre granulée de la présente invention possède également une absence totale de décantation, c'est-à-dire une excellente tenue en suspension, ce qui facilite grandement sa mise en oeuvre dans les procédés industriels, et représente un avantage majeur.

La tenue en suspension est mesurée dans une éprouvette graduée de 250 ml. Après reconstitution d'une solution de 250 ml à 15% de poudre granulée selon l'invention, notamment par remise en suspension de ladite poudre par une agitation douce, le volume décanté est mesuré toutes les heures pendant 7 heures, puis au bout de 24h et de 48h. Il n'y a aucune décantation de la poudre granulée, et ce même après 48h d'attente. Cette absence totale de décantation ne se retrouve pas avec le simple mélange. En effet, une heure après la reconstitution du mélange on observe un phénomène de décantation qui s'accentue avec le temps.

D'autres propriétés technologiques très intéressantes conférées par ladite poudre granulée concernent ses pouvoirs émulsifiant, moussant et gélifiant, en comparaison au simple mélange des constituants de cette poudre.

Les propriétés émulsifiantes sont dues à la faculté de réduire les tensions interfaciales entre composants hydrophiles et hydrophobes d'un aliment. Elles sont directement liées à la solubilité de la protéine. Les poudres possédant ces propriétés de surface auront un potentiel d'utilisation important dans les émulsions en général, dans les poudres de lait, réengraissées ou non, ainsi que dans les aliments contenant eau et graisses (charcuterie, viande, condiment).

Dans la présente invention, la capacité émulsifiante correspond au pourcentage de « crème d'émulsion », formée et stable après centrifugation, en fonction de la quantité en protéines et de la quantité d'huile. Pour la mesurer, on prépare, sur un ultraturax à 9500 rpm pendant 1 minute, une émulsion de 50% d'huile de colza par une solution de poudre granulée (hydratées 10 minutes dans de l'eau déminéralisée afin de s'affranchir des forces ioniques) à 2%. Puis l'émulsion est centrifugée pendant 5 minutes à 1500g. Le volume de crème est mesuré en ml. La capacité émulsifiante (CE) se calcule par la formule suivante :

```
CE (en %) = (volume de crème / volume total) x 100
```

La poudre granulée présente une capacité émulsifiante supérieure à 50%, de préférence supérieure à 60% et encore plus préférentiellement supérieure à 65%, alors que les simples mélanges ont une capacité émulsifiante réduite, inférieure à 20%.

En particulier, et à titre d'exemple, selon le test de mesure de la CE décrit ci-dessus, une poudre granulée comprenant des protéines de pois et des maltodextrines branchées présente une CE de 68,75%.

Ainsi, une des utilisations avantageuses de la poudre granulée selon la présente invention ou susceptible d'être obtenue selon la mise en oeuvre du procédé de préparation de poudre granulée selon l'invention tel que décrit ci-dessus, est qu'elle peut-être utilisée comme agent émulsifiant dans les compositions précédemment citées, en substitution totale de tout autre agent émulsifiant, et en particulier de la lécithine. Ladite poudre granulée peut être elle-même totalement exempte d'agent émulsifiant, considéré comme des additifs selon la réglementation européenne. D'ailleurs, une des utilisations avantageuses de la poudre granulée selon la présente invention ou susceptible d'être obtenue selon la mise en oeuvre du procédé de préparation de poudre granulée selon l'invention tel que décrit ci-dessous, est qu'elle peut-être utilisée comme agent émulsifiant dans les compositions précédemment citées, en substitution totale de tout autre agent émulsifiant, et en particulier de la lécithine.

En effet, l'utilisation de ladite poudre permet d'éliminer totalement la lécithine des formulations alimentaires, et plus particulièrement des formulations alimentaires se présentant totalement ou partiellement sous la forme d'une émulsion, c'est-à-dire contenant au moins deux ingrédients non miscibles (typiquement de l'eau et de l'huile).

De façon générale, les émulsifiants, appelés parfois émulsionnants, stabilisent les émulsions. Les émulsifiants actuellement utilisés dans les industries sont soit des produits naturels purifiés, soit des produits chimiques synthétiques dont les structures sont très proches de celles des produits naturels.

Ce sont le plus souvent des tensioactifs ou agents de surface. Ce sont des molécules qui possèdent une extrémité ayant une affinité pour l'eau (hydrophile) et une extrémité ayant une affinité pour l'huile (hydrophobe). Dans l'agroalimentaire, les émulsifiants sont utilisés pour augmenter l'onctuosité de certains produits, permettant d'obtenir une texture particulière. Un des émulsifiants les plus connu est incontestablement la lécithine.

En effet, traditionnellement la lécithine, connue également sous le nom de phosphatidylcholine, est utilisée comme émulsifiant des les industries alimentaires, cosmétiques et autres. C'est un émulsifiant naturel que l'on tire industriellement par un traitement aqueux de l'huile de soja. Elle se présente sous la forme d'un liquide pâteux, de couleur brune. Son aspect est peu appétissant et pas très agréable au goût. La lécithine se classe dans la catégorie des lipides. Elle peut également être extraite des jaunes d'oeufs mais le procédé est trop couteux pour être appliqué à un stade industriel.

Les lécithines sont des additifs alimentaires, et sont soumises, comme les autres additifs alimentaires, à une réglementation européenne stricte qui régit l'évaluation de leur innocuité, leur autorisation et leur étiquetage. Ces réglementations exigent que tous les émulsifiants ajoutés, sous quelque forme que ce soit, soient mentionnés sur l'emballage du produit soit par leur nom, soit par leur code européen (lettre E suivie d'un nombre, E322 pour la lécithine) comme tous les autres additifs alimentaires. Qui plus est, comme les lécithines sont extraites du soja pour une utilisation au stade industriel, elles ont également subi le contrecoup de l'image négative véhiculée par les Organismes Génétiquement Modifiés dont le soja peut faire parti.

Ainsi la poudre granulée selon la présente invention ou susceptible d'être obtenue selon la mise en oeuvre du procédé de préparation de poudre granulée selon l'invention tel que décrit ci-dessus, étant de préférence elle-même dénuée d'émulsifiants tels que la lécithine, permet d'éviter l'utilisation d'autres émulsifiants, et en particulier de la lécithine, et permet ainsi de s'affranchir à la fois des risques d'allergies et de l'image négative liés au soja ainsi que l'étiquetage sur l'emballage de la lécithine comme additif alimentaire.

Les propriétés moussantes, qui sont très appréciées en pâtisseries (cakes, soufflets, meringues) et dans la fabrication de mousses, laitières ou autres, de crèmes fouettées, résultent d'un déplissement partiel des protéines qui s'orientent à l'interface eau/air.

Dans la présente invention, le pouvoir moussant est mesuré dans une éprouvette graduée de 500 ml. Une solution à 15% de poudre granulée conforme à la présente invention est préparée sur un ultraturax à 9500 rpm pendant 1 minute, avant d'être transférée dans l'éprouvette graduée. Les volumes de mousse et de liquide sont mesurés toutes les 10 minutes pendant 30 minutes. Le temps nécessaire pour que la mousse atteigne 50% de son volume initial est également mesuré et permettra de quantifier la stabilité de la mousse.

La poudre granulée possède un excellent pouvoir moussant, extrêmement stable en fonction du temps alors que le simple mélange ne mousse que très peu, et d'une mousse qui est instable au cours du temps.

Ainsi la poudre granulée possède des propriétés fonctionnelles (pouvoir émulsifiant, capacité moussante) qui lui ont été conférées notamment par son procédé de préparation.

Une autre propriété très intéressante conférée par la dite poudre granulée selon la présente invention est la nette amélioration du goût d'une part, de la palatabilité et du corps défini également par la viscosité en bouche d'autre part. En effet, la poudre granulée possède un goût neutre, contrairement au simple mélange qui peut présenter un goût de légumineuse plus marqué et être par conséquent un frein à certaines applications alimentaires. Dans certaines applications, la palatabilité et le corps se trouvent également améliorés par rapport au simple mélange.

Ces propriétés fonctionnelles très intéressantes et n'existant pas sur de simple mélange les destinent entre autre à des applications très diversifiées et variées.

Un autre aspect de la présente invention concerne l'utilisation de la poudre granulée dans les domaines de la cosmétique, de la détergence, de l'agrochimie, des formulations industrielles, pharmaceutiques, des matériaux de construction, des fluides de forage, en fermentation, en nutrition animale et dans des applications alimentaires.

Par conséquent, la présente invention concerne également des compositions cosmétique, détergente, agrochimique, des formulations industrielles, pharmaceutiques, des matériaux de construction, des fluides de forage, des milieux de fermentation, des compositions nutritionnelles animales, des applications alimentaires comprenant la poudre granulée selon la présente invention ou susceptible d'être obtenue selon la mise en oeuvre du procédé de préparation de poudre granulé selon l'invention tel que décrit ci-dessus.

Dans ces domaines, la poudre granulée selon l'invention peut être utilisée dans des compositions en tant qu'agent fonctionnel tel qu'agent émulsifiant, foisonnant, stabilisant, épaississant et/ou gélifiant, notamment en substitution de tout ou partie des protéines animales.

Par conséquent, la présente invention concerne également un agent émulsifiant, foisonnant, stabilisant, épaississant et/ou gélifiant, pouvant être utilisé en substitution de tout ou partie des protéines animales comprenant la poudre granulée selon la présente invention ou susceptible d'être obtenue selon la mise en oeuvre du procédé de préparation de poudre granulée selon l'invention tel que décrit ci-dessus.

Une utilisation particulièrement avantageuse et intéressante de la présente invention concerne la réalisation de préparations destinées à la nutrition clinique et/ou à des individus souffrant de dénutrition. En effet l'association des protéines végétales, et plus particulièrement des protéines de pois avec au moins une fibre végétale, et de préférence avec au moins une fibre végétale soluble permet de pallier au problème de la dénutrition.

Il existe deux types de dénutrition :

- la dénutrition protéique : la carence protéique prédomine, en particulier en cas de syndrome inflammatoire et d'hypercatabolisme protéique. On l'appelle également la dénutrition endogène.
- le marasme : la carence d'apport est énergétique, et le catabolisme protéique est, au contraire, réduit (adaptation). On l'appelle également la dénutrition de type exogène où les apports alimentaires sont insuffisants en quantité et en qualité.

Les conséquences de la dénutrition sont nombreuses. Elle se caractérise par une perte d'énergie, suivie le plus souvent d'une anémie voire d'une asthénie. Elle se manifeste également par une perte de masse musculaire, réduisant les facultés physiques et augmentant les risques de chute. Dans les dénutritions, il y a une diminution et une altération des fonctions immunitaires. Les infections, notamment opportunistes, y sont plus fréquentes et plus graves: *pneumococystis carinii,* mycobactéries atypiques, mycoses, infections virales (CMV, Herpès...). Le risque de mortalité s'accroît. Enfin, le renouvellement cellulaire est ralenti, et les tissus cellulaires en pâtissent.

Les personnes âgées sont particulièrement exposées aux problèmes de la dénutrition. Mais c'est également le cas des personnes vivant dans des pays pauvres, ou encore des personnes hospitalisées suite à des maladies graves et longues.

Ainsi, dans les cas de dénutrition, la poudre granulée selon la présente invention ou susceptible d'être obtenue selon la mise en oeuvre du procédé de préparation de poudre granulée selon l'invention tel que décrit ci-dessus, peut être utilisée dans la formulation d'aliments hyperprotéinés et hypercaloriques destinés à un usage oral.

La poudre granulée selon la présente invention ou susceptible d'être obtenue selon la mise en oeuvre du procédé de préparation de poudre granulée selon l'invention tel que décrit ci-dessus, est utilisée comme substitut total ou partiel des protéines animales, et plus particulièrement des protéines laitières, traditionnellement utilisées dans les formulations classiques de crèmes hyperprotéinées.

Dans un mode préféré, ces dits aliments sont sous la forme de crèmes, car cette matrice alimentaire présente beaucoup d'avantages en termes de palatabilité, de goût et de facilité d'emploi. Elles peuvent être transportées facilement, être consommées n'importe où, et ne nécessitent pas d'être réchauffées. De plus, elles ne nécessitent pas d'être mastiquées et ne font par conséquent pas appel à la salive dont sont généralement dépourvue les personnes souffrant de dénutrition. Grâce à leur texture crémeuse, homogène, lisse et émulsifiée, elles peuvent être directement avalées, sans effort.

Une telle application est exemplifiée dans l'exemple 4 ci-après.

Une autre des utilisations particulièrement avantageuse et intéressante de la présente invention comme substitut total ou partiel des protéines animales, et plus particulièrement des protéines laitières, concerne la réalisation d'un produit laitier choisi dans le groupe constitué par les fromages frais et affinés, les fromages tartinables, les laits fermentés, les smoothies au lait, les yaourts, les spécialités laitières, les glaces fabriquées à partir de lait.

Selon un autre mode plus préférentiel, la poudre selon l'invention est utilisée pour la fabrication de fromages avec substitution partielle ou totale des protéines laitières.

Dans la présente invention, le terme fromage désigne un aliment obtenu à partir de lait coagulé ou de produits laitiers, comme la crème, puis éventuellement d'un égouttage, suivi ou non d'une étape de fermentation et éventuellement d'un affinage (fromages affinés). La dénomination « fromage » est réservée, selon le décret n° 88-1206 du 30 décembre 1988, au produit fermenté ou non, affiné ou non, obtenu à partir de matières d'origine exclusivement laitière (lait entier, lait partiellement ou totalement écrémé, crème, matière grasse, babeurre), utilisées seules ou en mélange, et coagulées en totalité ou en partie avant égouttage ou après élimination partielle de leur eau.

Le lait est acidifié, généralement à l'aide d'une culture bactérienne. Une enzyme, la présure, ou un substitut comme par exemple de l'acide acétique, du vinaigre ou de la GDL (gluconodeltalactone), peut ensuite être adjointe afin de provoquer la coagulation et former le lait caillé et le petit-lait.

Dans la présente invention le terme fromage désigne également tous les fromages fondus et tous les fromages fondus tartinables. Ces deux types de fromages sont obtenus par broyage, mélange, fonte et émulsification, sous l'effet de la chaleur et d'agents émulsifiants, d'une ou plusieurs variétés de fromage, avec ou sans adjonction de constituants laitiers et/ou d'autres denrées alimentaires (crème, vinaigre, épices, enzymes,..).

Dans un autre mode préférentiel, la poudre selon l'invention est utilisée pour la fabrication de yaourts, en substitution totale ou partielle du lait, de la poudre de lait reconstituée ou des protéines de lait. Une telle application est exemplifiée dans l'exemple 3 ci-après.

Ainsi, la poudre granulée selon la présente invention ou susceptible d'être obtenue selon la mise en oeuvre du procédé de préparation de poudre granulée selon l'invention tel que décrit ci-dessus, peut être utilisée en substitution partielle ou totale des protéines laitières dans une formulation alimentaire appartenant au groupe défini par les fromages frais et affinés, les fromages fondus éventuellement tartinables, les laits fermentés, les smoothies au lait, les yaourts, les spécialités laitières, les glaces fabriquées à partir de lait.

L'invention s'étend ainsi aux formulations alimentaires comprenant une poudre granulée selon l'invention ou susceptible d'être obtenue selon la mise en oeuvre du procédé de préparation de poudre granulée selon l'invention tel que décrit ci-dessus, ou comprenant un agent émulsifiant, foisonnant, stabilisant, épaississant et/ou gélifiant, pouvant être utilisé en substitution de tout ou partie des protéines animales tel que décrit ci-dessus, telles que : :

- les boissons,
- les produits laitiers (dont par exemple les fromages frais et affinés, les fromages fondus éventuellement tartinables, les laits fermentés, les smoothies au lait, les yaourts, les spécialités laitières, les glaces fabriquées à partir de lait),
- les préparations destinées à la nutrition clinique et/ou à des individus souffrant de dénutrition,

- les préparations destinées à la nutrition infantile,
- les mélanges de poudres destinées à des produits de régime, ou pour sportifs,
- les soupes, sauces, et aides culinaires
- les produits à base de viande, plus particulièrement dans les secteurs des pâtes fines et des saumures, notamment dans la fabrication de jambons,
- les produits à base de poissons, comme les produits à base de surimi,
- les produits céréaliers comme le pain, les pâtes, biscuits, pâtisseries, céréales et barres,
- les produits végétariens et plats cuisinés.

La poudre granulée selon la présente invention ou susceptible d'être obtenue selon la mise en oeuvre du procédé de préparation de poudre granulée selon l'invention tel que décrit ci-dessus trouve également des applications en alimentation animale.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

EXEMPLE 1 Préparation d'une poudre granulée selon l'invention

Une poudre granulée contenant 60% de protéines de pois et 40% de maltodextrines branchées a été préparée de la manière suivante.

Les protéines de pois utilisées sont commercialisées par la demanderesse sous la dénomination Nutralys® S 85 M. Leur taux de protéines totales est de 85%.

Les maltodextrines branchées utilisées appartiennent à la gamme NUTRIOSE®, également commercialisée par la Demanderesse, et sont par exemple le NUTRIOSE® FB 06.

- Tout d'abord, une suspension a été préparée à un ratio protéines/fibres de 60/40 dans une cuve agitée et à une température de 50°C.
- Le mélange a une MS de 30%.
- Le mélange obtenu a été homogénéisé sur un homogénéisateur haute pression à double étages (150 bars sur le 1er étage et 50 bars sur le second) avant d'être séché, et ce afin d'avoir un mélange parfaitement homogène.
- Le mélange a été atomisé dans une tour d'atomisation de type MSD équipée d'une buse d'atomisation haute pression avec recyclage des fines particules en tête de tour.

Les conditions d'atomisation sont les suivantes :

- La buse d'injection a été choisie de manière à obtenir une pression de 220 bar pour un débit de 120 1/h.
- L'air utilisé était à 6g/kg d'humidité.
- La température des airs d'entrée ont été réglées de la manière suivante :

    - pour l'air d'entrée en amont de la tête de tour : température de 180 °C,
    - pour le lit fluidisé statique : température de 55°C,
    - pour le lit fluidisé vibré : température de l'ordre de 20°C.

- La température de sortie était de 58°C.
- la vitesse de l'air en amont a été réglée à 14,7 m/s, et celle de l'air du lit fluidisé statique était de 11 m/s.

La poudre granulée obtenue selon l'exemple 1 présente les caractéristiques suivantes.

- Humidité : 5,5%
- Matière sèche : 94,5%
- Diamètre moyen volumique D 4,3 : 200 $\mu$m

EXEMPLE 2: Mesure du pouvoir gélifiant

Le pouvoir gélifiant de la poudre granulée obtenue selon l'exemple 1 a été comparé au pouvoir gélifiant du simple mélange de poudre, en utilisant les deux même constituants, ainsi que le même ratio, que ceux utilisés pour la préparation de la poudre granulée.

## 1. Préparation des solutions

Une solution à 8% en concentration a été préparée en disposant 8g d'échantillon (poudre granulée ou simple mélange de poudres) dans 100 g d'eau distillée à 20°C +/- 1°C. 0,3g de gomme xanthane ont été ajoutés aux solutions précédentes afin d'éviter la décantation des particules sous l'effet de la gravité. Le mélange a été placé sous agitation lente pendant 30 min à une vitesse de 250 rpm afin de permettre une hydratation optimale des protéines contenues dans les échantillons.

## 2. Matériel de mesure

Une caractérisation de la gélatinisation des échantillons au cours d'un cycle thermique a été réalisée, en mode dynamique oscillatoire, au moyen du rhéomètre PHYSICA® MCR301 (Anton Paar) équipé d'une géométrie de type plateaux parallèles striés afin d'éviter les phénomènes de glissement.

## 3. Protocole de mesure

1 ml de la suspension hydratée, préparée dans le paragraphe (1), placé entre les plateaux parallèle de diamètre 50 mm, a été soumis à une sollicitation de type sinusoïdale, à la fréquence de 1 Hertz et une amplitude de déformation de 0.1 à 0.5 %, tout en appliquant le cycle thermique suivant :

1. Chauffage de 20 à 90°C en 2000s -0.5% de déformation,
2. Maintien à 90°C pendant 3600s - 0.2 % de déformation,
3. Refroidissement de 90 à 4°C en 2000s - 0.1% de déformation,
4. Maintien à 4°C pendant 12000s - 0.1 % de déformation.

## 4. Interprétation

Le suivi des niveaux de modules de conservation G' et de dissipation G'' a permis de caractériser la cinétique de la gélification de la protéine sous l'effet de la chaleur ainsi que le niveau relatif de la force du gel obtenu.
Les courbes obtenues ont permis de mesurer la vitesse de gélification, ainsi que la force du gel obtenu mais également le comportement du gel à froid.
Les courbes obtenues avec la poudre granulée en comparaison des courbes obtenues avec le simple mélange présentaient une vitesse de gélification plus rapide, un niveau maximum plus élevé ce qui signifie que les gels étaient plus solides, ainsi qu'une meilleure texture et tenue du gel à froid.
Ceci signifie que le pouvoir gélifiant de la poudre granulée était bien meilleur que le pouvoir gélifiant du simple mélange physique.

**EXEMPLE 3** : Préparation de yaourts à boire contenant la poudre granulée selon la présente invention

Dans cet exemple, la poudre granulée a été obtenue selon le protocole mis en oeuvre dans l'exemple 1 en utilisant cette-fois un ratio pondéral composition de protéines de pois/maltodextrines branchées de 45/55.
La poudre granulée contient donc 45% d'une composition de protéines de pois (à un taux de protéines totales de 85%) et 55% de maltodextrines branchées.
Les maltodextrines branchées utilisées appartiennent à la gamme NUTRIOSE®, également commercialisée par la Demanderesse, et sont par exemple le NUTRIOSE® FB 06.
Des essais ont été réalisés en substituant le lait par la poudre granulée ou par le mélange simple des deux constituants. Deux pourcentages de substitution ont été testés : 10% et 50%.
Les yaourts à boire (ESSAI 10 et ESSAI 50) ont été préparés selon la recette figurant dans le tableau ci-dessous, et contiennent la poudre granulée de ladite invention aux deux taux de substitution différents. Ils ont ensuite été comparés au yaourt ne contenant que du lait ainsi qu'aux yaourts à boire témoin (TEMOIN 10 et TEMOIN 50) préparés en parallèle, dans les mêmes conditions et ne contenant pas la poudre granulée selon la présente invention mais le simple mélange physique des deux constituants.
Les différents yaourts à boire ont été dégustés en aveugle par un jury entrainé et expert en analyse sensoriel de 20 personnes. Les paramètres suivants ont été testés et notés sur une échelle de 1 à 5, 1 étant la note la plus mauvaise et 5 la meilleure : couleur, odeur, goût, onctuosité en bouche, consistance, note générale.

1. Recettes utilisées

| | | Poudre granulée | | Mélange « simple » | |
|---|---|---|---|---|---|
| Taux de substitution | | 10% | 50% | 10% | 50% |
| | TEMOIN | E10 | E50 | T10 | T50 |
| lait écrémé du commerce | 86 | 77,5 | 43 | 77,5 | 43 |
| Poudre granulée selon l'invention en poudre | / | 8,5 | 43 | 8,5 | 43 |
| SweetPearl™ P200 | 10 | 10 | 10 | 10 | 10 |
| NUTRIOSE® FB06 | 4 | 4 | 4 | 4 | 4 |
| Ferment probiotique BMY-1 | qsp | qsp | qsp | qsp | qsp |
| Total | 100 | 100 | 100 | 100 | 100 |

Le SweetPearl™ P200 est le nom commercial du maltitol de la société Demanderesse : il s'agit d'un glucide sous forme de poudre cristalline, issu de l'amidon de blé et de maïs.
Le NUTRIOSE® FB06 est une fibre soluble commercialisée également par la société Demanderesse.
Le ferment utilisé est commercialisé par la société CHR Hansen A/S (Danemark).

2. Mode opératoire

- Le NUTRIOSE® FB06 a été dissous dans le lait.
- Le mélange a ensuite été pasteurisé à 90°C pendant 10 minutes.
- Ce mélange pasteurisé a ensuite été homogénéisé grâce à un homogénéisateur NIRO® Soavi (groupe GEA), à une pression de 180 bars.
- L'émulsion ainsi obtenue a ensuite été refroidie à 43°C et maintenue à cette température.
- Les ferments prébiotiques ont été rajoutés au mélange refroidi, et la fermentation a été contrôlée en mesurant continuellement le pH à l'aide d'un pH-mètre.
- La fermentation a été stoppée lorsque le pH du mélange a atteint la valeur de 4,5.
- Le SweetPearl a ensuite été rajouté et le mélange a été homogénéisé avec un homogénéisateur de type ALM2, commercialisé par la société PIERRE GUERIN TECHNOLOGIES (France).
- L'ensemble a été pasteurisé à 90°C pendant 15 secondes, afin d'éliminer les risques de contamination microbiologique.
- Le tout a été refroidi à 5°C avant dégustation.

3. Résultats

| | | Poudre granulée | | Mélange « simple » | |
|---|---|---|---|---|---|
| | | 10% | 50% | 10% | 50% |
| | TEMOIN | E10 | E50 | T10 | T50 |
| Couleur | 5 | 4 | 4 | 3 | 4 |
| Goût | 5 | 5 | 3 | 3 | 2 |
| Onctuosité en bouche | 5 | 4 | 4 | 2 | 2 |
| Consistance | 5 | 5 | 5 | 2 | 1 |

(suite)

| | | Poudre granulée | | Mélange « simple » | |
|---|---|---|---|---|---|
| | | 10% | 50% | 10% | 50% |
| | TEMOIN | E10 | E50 | T10 | T50 |
| Note générale | 5 | 5 | 4 | 2 | 2 |

Cet essai démontre parfaitement qu'il est tout à fait possible de substituer une partie des protéines laitières dans un yaourt à boire par la poudre granulée de la présente invention, ou susceptible d'être obtenue selon la mise en oeuvre du procédé de préparation de poudre granulée selon l'invention tel que décrit ci-dessus.

Les yaourts à boire contenant ladite poudre granulée ont été jugés très satisfaisants et identiques au yaourt à boire témoin ne contenant que du lait, avec une très légère préférence mais non significative pour le yaourt à boire E10 (substitution des protéines de lait à un taux de 10%). Les deux yaourts à boire contenant les simples mélanges physiques des deux constituants ont été jugés négativement et leur évaluation démontre parfaitement qu'ils ne se rapprochent absolument pas du yaourt témoin, aussi bien au niveau du goût, de leur onctuosité en bouche et de leur consistance (jugés beaucoup trop liquides). Ainsi, ladite poudre possède des propriétés fonctionnelles gélifiantes qui lui ont été conférées notamment par son procédé de préparation, propriétés qui ne sont pas retrouvées sur le mélange simple des constituants.

**EXEMPLE 4**: Exemple de formulation de crème hyperprotéinée contenant la poudre granulée selon la présente invention

Dans cet exemple, la poudre granulée a été obtenue selon le protocole mis en oeuvre dans l'exemple 1 en utilisant cette fois un ratio pondéral composition de protéines de pois/maltodextrines branchées de 60/40.

La poudre granulée contient donc 60% d'une composition de protéines de pois (à un taux de protéines totales de 85%) et 40% de maltodextrines branchées.

Les maltodextrines branchées utilisées appartiennent à la gamme NUTRIOSE®, également commercialisée par la Demanderesse, et sont par exemple le NUTRIOSE® FB 06.

1. Recettes utilisées

| | Ingrédients (en poids) |
|---|---|
| Eau déminéralisée | 677,5 |
| Poudre de lait entier à 26% MG | 50,0 |
| Poudre granulée selon l'invention en poudre | 124,5 |
| Sucre | 72,3 |
| Amidon modifié Clearam®CR3020 | 6 |
| Maltodextrine Glucidex® 19IT | 35,0 |
| Huile raffinée de colza | 26,0 |
| Arôme vanille Fontarome® | 8,5 |
| Acesulfame K | 0,2 |
| TOTAL | 1000 |

2. Mode opératoire

• L'eau déminéralisée a été chauffée à 70°C. Une partie de cette eau a été utilisée pour dissoudre l'arôme vanille.
• Les différentes poudres (lait, poudre granulée sucre, amidon modifié, maltodextrine) ont été mélangées à sec, avant d'être ajoutées à l'eau chaude. Le tout a été mélangé et maintenu par chauffage à 70°C.

- L'huile de colza a ensuite été ajouté au mélange précédent.
- L'ensemble a été mélangé grâce à un mixeur à haute capacité (Polytron PT 45/80, Kinematica, Switzerland) pendant 4 minutes sur la vitesse 4.
- L'arôme a ensuite été ajouté et le tout a été pasteurisé à 130°C pendant 175 secondes, afin d'éliminer les risques de contamination microbiologique.
- Le tout a été refroidi à température ambiante avant dégustation.

3. Résultats

Les caractéristiques nutritionnelles de la crème hyperprotéinée préparée avec la poudre granulée selon la présente invention sont réunies dans le tableau ci-dessous.

|  | Valeur en g.100g de crème préparée |
|---|---|
| Valeur énergétique | 147 = 165Kcal/100ml |
| Teneur en protéines | 9,2 |
| Teneur en carbohydrates | 13,7 |
| Teneur en sucres | 9,7 |
| Teneur en matières grasses | 3,96 |
| Teneur en fibres | 2,55 |
| Teneur en eau | 69 |

La crème apporte en termes de valeur énergétique 165Kcal pour 100ml. Ce qui signifie qu'en consommant 500 ml de crème, le sujet ingère déjà 825 Kcal environ, soit 1/3 de ses besoins journaliers (en prenant comme base un besoin de 2400 Kcal/jour pour un homme).

Au niveau de l'apport énergétique total, les protéines contenues dans la crème contribuent à hauteur de 29% à cet apport, les carbohydrates à hauteur de 43% et les matières grasses à hauteur de 28%.

La crème a été dégustée par un jury entrainé et expert en analyse sensoriel de 20 personnes, et a été comparée à une crème commerciale ayant la même vocation, mais ne contenant que des protéines de lait. Elle a été jugée tout à fait satisfaisante et en tout point identique à la crème commerciale, aussi bien en termes de consistance en bouche que d'onctuosité et de goût.

Elle a été jugée plus digeste du fait de sa teneur fortement réduite en protéines laitières qui peuvent parfois être écoeurantes, surtout chez les sujets malades.

**Revendications**

1. Poudre granulée comprenant au moins une protéine de pois et au moins une fibre végétale **caractérisée en ce qu'**elle présente :

   - un diamètre moyen volumique laser D4,3 compris entre $10\mu$m et $500\ \mu$m, de préférence entre $50\mu$m et $350\mu$m et encore plus préférentiellement entre $70\mu$m et $250\mu$m, et
   - une matière sèche, déterminée après étuvage à 130°C pendant 2 heures, supérieure à 80%, de préférence supérieure à 85%, et encore plus préférentiellement supérieure à 90% ;

   **caractérisée en ce que** ladite fibre végétale est une maltodextrine branchée.

2. Poudre granulée selon la revendication 1 **caractérisée en ce que** le ratio pondéral de la protéine de pois à la fibre végétale est compris entre 80 :20 et 45 :55.

3. Poudre granulée selon l'une quelconque des revendications 1-2, **caractérisée en ce que** la somme des quantités de protéine de pois et de fibre végétale est comprise entre 50 et 100% de la masse totale de ladite poudre granulée (sec/sec).

4. Poudre granulée selon l'une quelconque des revendications 1-3, **caractérisée en ce qu'**elle ne comprend pas de gluten.

5. Poudre granulée selon la revendication 1, **caractérisée en ce qu'**elle ne comprend pas d'émulsifiant autre que les protéines de pois, de préférence pas de lécithine ou dérivés de celle-ci.

6. Poudre granulée selon l'une quelconque des revendications 1-5, **caractérisée en ce qu'**elle présente :

   - une masse volumique apparente comprise entre 0,30 et 0,90 g/ml, de préférence comprise entre 0,40 et 0,60 g/ml ; et
   - une mouillabilité de moins de 30s, de préférence de moins de 10s et plus préférentiellement encore de moins de 6s ; et
   - une absence totale de décantation ; et
   - une capacité émulsifiante supérieure à 50%, de préférence supérieure à 60%, et plus préférentiellement encore supérieure à 65%.

7. Procédé de fabrication d'une poudre granulée selon l'une quelconque des revendications 1-6 **caractérisé en ce qu'**il consiste à sécher conjointement au moins deux constituants, et qu'il comprend une étape de mise en contact intime d'au moins une protéine de pois avec au moins une fibres végétale, ces étapes de mise en contact intime pouvant être menées selon toute méthode connue de l'homme du métier, et notamment selon une technique choisie parmi l'atomisation, la granulation et l'extrusion, et toute combinaison d'au moins deux de ces techniques, telle que ladite étape de mise en contact intime conduise à une matière sèche finale déterminée après étuvage à 130°C pendant 2 heures, supérieure à 80%, de préférence supérieure à 85%, et encore plus préférentiellement supérieure à 90%.

8. Procédé de fabrication d'une poudre granulée selon la revendication 7, **caractérisé en ce que** la fibre végétale est une maltodextrine branchée.

9. Procédé de fabrication d'une poudre granulée selon l'une quelconque des revendications 7 et 8, **caractérisé en ce que** le procédé comprend une étape d'atomisation d'une suspension d'au moins une protéine de pois et d'au moins une fibre végétale, ladite étape d'atomisation étant suivie par une étape de granulation de la poudre atomisée.

10. Procédé de fabrication d'une poudre granulée selon l'une quelconque des revendications 7 à 9, **caractérisé en ce qu'**il comprend les étapes suivantes :

    1) préparer à une température comprise entre 15 et 70°, et de préférence 15 et 50°C une suspension de protéines de pois et de maltodextrines branchées, dans laquelle :

       - lesdites protéines de pois possèdent une teneur en protéines solubles comprise entre 20 et 99 %, de préférence entre 45 et 90%, plus préférentiellement encore entre 50 et 80%, et en particulier entre 55 et 75% ;
       - lesdites maltodextrines branchées présentent entre 15 et 35% de liaisons glucosidiques 1-6, une teneur en sucres réducteurs inférieure à 20%, un poids moléculaire MW compris entre 4000 et 6000 g/mole et une masse moléculaire moyenne en nombre Mn comprise entre 250 et 4000 g/mole ;
       - le ratio pondéral des protéines de pois aux maltodextrines branchées est compris entre 80 :20 et 45 :55 ;
       - la matière sèche de la suspension est comprise entre 25 et 50%, de préférence entre 30 et 40% ;

          1') réaliser une première étape optionnelle de traitement thermique à température élevée et pendant un temps court afin de réduire les risques bactériologiques de la suspension obtenue selon 1, ledit traitement pouvant être choisi parmi les traitements HTST (High Temperature Short Time), UHT ;
          1") réaliser une seconde étape optionnelle, d'homogénéisation à haute pression de la suspension obtenue selon 1), et indépendamment de la première étape optionnelle ;

    2) maintenir ou ramener en cas de réalisation de l'étape 1') ladite suspension de protéines de pois et de maltodextrines branchées à une température comprise entre 15 et 80°C, et de préférence entre 15 et 50°C,
    3) atomiser ladite suspension dans une tour d'atomisation équipée d'une buse d'atomisation haute pression avec recyclage des fines particules en tête de tour,
    4) granuler dans ladite tour d'atomisation,
    5) récupérer la poudre granulée ainsi obtenue et comprenant les protéines de pois et de maltodextrines branchées.

11. Utilisation de la poudre granulée selon l'une quelconque des revendications 1 à 6 ou susceptibles d'être obtenus selon la mise en oeuvre du procédé selon l'une quelconque des revendications 7 à 10 dans les domaines de la cosmétique, de la détergence, de l'agrochimie, des formulations industrielles, pharmaceutiques, des matériaux de construction, des fluides de forage, en fermentation, nutrition animale et dans des applications alimentaires, de préférence comme agent émulsifiant, foisonnant, stabilisant, épaississant et/ou gélifiant, notamment en substitution de tout ou partie des protéines animales.

12. Composition cosmétique, détergente, agrochimique, formulations industrielles, pharmaceutiques, matériaux de construction, fluides de forage, milieu de fermentation, composition nutritionnelle animale, applications alimentaires comprenant la poudre granulée selon l'une quelconque des revendications 1 à 6 ou susceptible d'être obtenue selon la mise en oeuvre du procédé selon l'une quelconque des revendications 7 à 10.

13. Agent émulsifiant, foisonnant, stabilisant, épaississant et/ou gélifiant, pouvant être utilisé en substitution de tout ou partie des protéines animales comprenant la poudre granulée selon l'une quelconque des revendications 1 à 6 ou susceptible d'être obtenue selon la mise en oeuvre du procédé selon l'une quelconque des revendications 7 à 10.

14. Formulation alimentaire choisie dans le groupe constitué par les boissons, les produits laitiers, de préférence choisi dans le groupe constitué par les fromages frais et affinés, les fromages fondus éventuellement tartinables, les laits fermentés, les smoothies au lait, les yaourts, les spécialités laitières, les glaces fabriquées à partir de lait, les préparations destinées à la nutrition clinique et/ou à des individus souffrant de dénutrition, les préparations destinées à la nutrition infantile, les mélanges de poudres destinées à des produits de régime ou pour sportifs, les soupes, sauces, et aides culinaires, les produits à base de viande, les produits à base de poissons, tous les types de confiseries, les produits céréaliers, les produits végétariens et plats cuisinés comprenant un agent émulsifiant, stabilisant, épaississant et/ou gélifiant, pouvant être utilisé en substitution de tout ou partie des protéines animales selon la revendication 13.

**Patentansprüche**

1. Granuliertes Pulver, umfassend wenigstens ein Erbsenprotein und wenigstens eine pflanzliche Faser, **dadurch gekennzeichnet, dass** es aufweist:

   - einen mittleren Laser-Volumendurchmesser D4,3 zwischen 10 $\mu$m und 500 $\mu$m, bevorzugt zwischen 50 $\mu$m und 350 $\mu$m, noch bevorzugter zwischen 70 $\mu$m und 250 $\mu$m, und
   - eine Trockenmasse, bestimmt nach 2 Stunden Trocknen bei 130°C, von mehr als 80%, bevorzugt von mehr als 85% und noch bevorzugter von mehr als 90%;

   **dadurch gekennzeichnet, dass** besagte pflanzliche Faser ein verzweigtes Maltodextrin ist.

2. Granuliertes Pulver gemäß Anspruch 1, **dadurch gekennzeichnet, dass** das Gewichtsverhältnis von Erbsenprotein zu pflanzlicher Faser zwischen 80:20 und 45:55 beträgt.

3. Granuliertes Pulver gemäß einem der Ansprüche 1 bis 2, **dadurch gekennzeichnet, dass** die Summe der Mengen an Erbsenprotein und pflanzlicher Faser zwischen 50 und 100% des Gesamtgewichts besagten granulierten Pulvers beträgt.

4. Granuliertes Pulver gemäß einem der Ansprüche 1 bis 3, **dadurch gekennzeichnet, dass** es kein Gluten enthält.

5. Granuliertes Pulver gemäß Anspruch 1, **dadurch gekennzeichnet, dass** es keinen Emulgator außer den Erbsenproteinen, bevorzugt kein Lecithin oder Derivate davon, umfasst.

6. Granuliertes Pulver gemäß einem der Ansprüche 1 bis 5, **dadurch gekennzeichnet, dass** es aufweist:

   - eine Rohdichte zwischen 0,30 und 0,90 g/ml, bevorzugt zwischen 0,40 und 0,60 g/ml; und
   - eine Benetzbarkeit von wenigstens 30 s, bevorzugt von wenigstens 10 s und noch bevorzugter von wenigstens 6 s; und

- und ein vollständig ausbleibendes Absetzen; und
- ein Emulgiervermögen von größer als 50%, bevorzugt von größer als 60% und noch bevorzugter von größer als 65%.

7. Verfahren zur Herstellung eines granulierten Pulvers gemäß einem der Ansprüche 1 bis 6, **dadurch gekennzeichnet, dass** es aus gemeinsamen Trocknen wenigstens zweier Bestandteile besteht und dass es einen Schritt des innigen Inkontaktbringens wenigstens eines Erbsenproteins mit wenigstens einer pflanzlichen Faser umfasst, wobei diese Schritte des innigen Inkontaktbringens gemäß einem beliebigen dem Fachmann bekannten Verfahren und insbesondere gemäß einer Technik, ausgewählt aus Sprühtrocknen, Granulation und Extrusion und einer beliebigen Kombination aus wenigstens zwei dieser Techniken, durchgeführt werden können, wobei besagter Schritt des innigen Inkontaktbringens zu einer finalen Trockenmasse, bestimmt nach 2 Stunden Trocknen bei 130°C, von mehr als 80%, bevorzugt von mehr als 85% und noch bevorzugter von mehr als 90% führt.

8. Verfahren zur Herstellung eines granulierten Pulvers gemäß Anspruch 7, **dadurch gekennzeichnet, dass** die pflanzliche Faser ein verzweigtes Maltodextrin ist.

9. Verfahren zur Herstellung eines granulierten Pulvers gemäß einem der Ansprüche 7 und 8, **dadurch gekennzeichnet, dass** das Verfahren einen Schritt der Sprühtrocknung einer Suspension von wenigstens einem Erbsenprotein und wenigstens einer pflanzlichen Faser umfasst, wobei besagtem Sprühtrocknungsschritt ein Schritt der Granulation des sprühgetrockneten Pulvers folgt.

10. Verfahren zur Herstellung eines granulierten Pulvers gemäß einem der Ansprüche 7 bis 9, **dadurch gekennzeichnet, dass** es die folgenden Schritte umfasst:

1) Herstellen einer Suspension von Erbsenproteinen und verzweigten Maltodextrinen bei einer Temperatur zwischen 15 und 70°C und bevorzugt zwischen 15 und 50°C, wobei:

- besagte Erbsenproteine einen Gehalt an löslichen Proteinen zwischen 20 und 99%, bevorzugt zwischen 45 und 90%, bevorzugter zwischen 50 und 80% und insbesondere zwischen 55 und 75%, besitzen;
- besagte verzweigte Maltodextrine zwischen 15 und 35% (1-6)Glucosidbindungen, einen Gehalt an reduzierenden Zuckern von kleiner als 20%, ein Molekulargewicht (MW) zwischen 4000 und 6000 g/mol und eine zahlenmittlere Molmasse (Mn) zwischen 250 und 4000 g/mol aufweisen;
- das Gewichtsverhältnis von Erbsenproteinen zu verzweigten Maltodextrinen zwischen 80:20 und 45:55 beträgt;
- die Trockenmasse der Suspension zwischen 25 und 50%, bevorzugt zwischen 30 und 40% beträgt;

1') Durchführen eines optionalen ersten Schritts der kurzzeitigen thermischen Behandlung bei einer erhöhten Temperatur, um bakterielle Risiken der gemäß 1) erhaltenen Suspension zu verringern, wobei besagte Behandlung aus UHT-, HTST-(High Temperature Short Time)-Behandlungen ausgewählt sein kann;
1") Durchführen eines optionalen zweiten Schritts der Hochdruck-Homogenisation der gemäß 1) erhaltenen Suspension und unabhängig vom optionalen ersten Schritt;

2) Aufrechthalten oder, im Falle der Durchführung von Schritt 1'), Einstellen der Temperatur besagter Suspension von Erbsenproteinen und verzweigten Maltodextrinen zwischen 15 und 80°C und bevorzugt zwischen 15 und 50°C,
3) Sprühtrocknen besagter Suspension in einem Sprühturm, der mit einer Hochdrucksprühdüse mit Rückführung feiner Partikel im oberen Teil des Turms ausgestattet ist,
4) Granulieren in besagtem Sprühturm,
5) Wiedergewinnen des auf diese Weise erhaltenen granulierten Pulvers, das die Erbsenproteine und die verzweigten Maltodextrine umfasst.

11. Verwendung des granulierten Pulvers gemäß einem der Ansprüche 1 bis 6 oder erhältlich gemäß der Anwendung des Verfahrens gemäß einem der Ansprüche 7 bis 10, auf dem Gebiet der Kosmetik, der Detergenzien, der Agrochemie, in industriellen, pharmazeutischen Formulierungen, Baumaterialien, Bohrflüssigkeiten, bei Fermentation, Tierernährung und in Lebensmittelanwendungen, bevorzugt als Emulgator, Quellmittel, Stabilisator, Verdickungsmittel und/oder Gelbildner, insbesondere als Ersatz der gesamten oder eines Teils der tierischen Proteine.

**12.** Kosmetische, detergenshaltige, agrochemische Zusammensetzung, industrielle, pharmazeutische Formulierungen, Baumaterialien, Bohrflüssigkeiten, Fermentationsmedium, Tiernahrungsmittelzusammensetzung, Lebensmittelanwendungen, umfassend das granulierte Pulver gemäß einem der Ansprüche 1 bis 6 oder erhältlich gemäß der Anwendung des Verfahrens gemäß einem der Ansprüche 7 bis 10.

**13.** Emulgator, Quellmittel, Stabilisator, Verdickungsmittel und/oder Gelbildner, der/das als Ersatz der gesamten oder eines Teils der tierischen Proteine verwendet werden kann, umfassend das granulierte Pulver gemäß einem der Ansprüche 1 bis 6 oder erhältlich gemäß der Anwendung des Verfahrens gemäß einem der Ansprüche 7 bis 10.

**14.** Lebensmittelformulierung, ausgewählt aus der Gruppe, bestehend aus Getränken, Milchprodukten, bevorzugt ausgewählt aus der Gruppe, bestehend aus frischen und gereiften Käsen, Schmelzkäsen, eventuell Streichkäsen, fermentierten Milchprodukten, Milch-Smoothies, Joghurts, Milchspezialitäten, aus Milch hergestellten Eisprodukten, Präparaten für die klinische Ernährung und/oder für Personen, die an Mangelernährung leiden, Präparaten für die Säuglingsernährung, Pulvermischungen für Diätprodukte oder für Sportler, Suppen, Saucen und Kochhilfen, Produkten auf Fleischbasis, Produkten auf Fischbasis, allen Arten von Süßwaren, Getreideprodukten, vegetarischen Produkten und Fertiggerichten, umfassend einen Emulgator, einen Stabilisator, ein Verdickungsmittel und/oder einen Gelbildner, der/das als Ersatz der gesamten oder eines Teils der tierischen Proteine gemäß Anspruch 13 verwendet werden kann.

**Claims**

**1.** A granulated powder comprising at least one pea protein and at least one vegetable fiber, **characterized in that** it has:

- a laser volume mean diameter D4,3 of between 10 $\mu$m and 500 $\mu$m, preferably between 50 $\mu$m and 350 $\mu$m, and even more preferably between 70 $\mu$m and 250 $\mu$m, and
- a dry matter content, determined after stoving at 130°C for 2 hours, of greater than 80%, preferably greater than 85%, and even more preferably greater than 90%;

**characterized in that** the vegetable fiber is a branched maltodextrin.

**2.** The granulated powder as claimed in claim 1, **characterized in that** the weight ratio of the pea protein to the vegetable fiber is between 80:20 and 45:55.

**3.** The granulated powder as claimed in claims 1-2, **characterized in that** the sum of the amounts of vegetable protein and of vegetable fiber is between 50% and 100%, of the total mass of said granulated powder (dry/dry).

**4.** The granulated powder as claimed in claims 1-3, **characterized in that** it does not comprise gluten.

**5.** The granulated powder as claimed in claim 1, **characterized in that** it does not comprise any emulsifying agent other than the pea proteins, and preferably does not comprise any lecithin or derivatives thereof.

**6.** The granulated powder as claimed in claims 1-5, **characterized in that** it exhibits:

- an apparent density of between 0.30 and 0.90 g/ml, preferably between 0.40 and 0.60 g/ml; and
- a wettability of less than 30 s, preferably less than 10 s, and even more preferably less than 6 s; and
- a total absence of decantation; and
- an emulsifying capacity of greater than 50%, preferably greater than 60%, and even more preferably greater than 65%.

**7.** A process for manufacturing a granulated powder as claimed in claims 1-6, **characterized in that** it consists in conjointly drying at least two constituents, and **in that** it comprises a step of bringing at least one pea protein into intimate contact with at least one vegetable fiber, it being possible for this step of bringing into intimate contact to be carried out according to any process known to those skilled in the art, and in particular according to a technique chosen from spray-drying, granulation and extrusion, and any combination of at least two of these techniques, such that said step of bringing into intimate contact results in a final dry matter content, determined after stoving at 130°C for 2 hours, of greater than 80%, preferably greater than 85%, and even more preferably greater than 90%.

8. The process for manufacturing a granulated powder as claimed in claim 7, **characterized in that** the vegetable fiber is a branched maltodextrin.

9. The process for manufacturing a granulated powder as claimed in any one of claims 7 and 8, **characterized in that** the process comprises a step of spray-drying a suspension of at least one pea protein and of at least one vegetable fiber, said spray-drying step being followed by a step of granulation of the spray-dried powder.

10. The process for manufacturing a granulated powder as claimed in any one of claims 7 to 9, **characterized in that** it comprises the following steps:

1) preparing, at a temperature between 15 and 70°C, and preferably 15 and 50°C, a suspension of pea proteins and of branched maltodextrins, in which:

- said pea proteins have a soluble protein content of between 20% and 99%, preferably between 45% and 90%, even more preferably between 50% and 80%, and in particular between 55% and 75%;
- said branched maltodextrins have between 15% and 35% of 1-6 glucosidic linkages, a reducing sugar content of less than 20%, a molecular weight MW of between 4000 and 6000 g/mol and a number-average molecular mass Mn of between 250 and 4000 g/mol;
- the weight ratio of the pea proteins to the branched maltodextrins is between 80:20 and 45:55;
- the dry matter content of the suspension is between 25% and 50%, preferably between 30% and 40%;

1') carrying out an optional first step of heat treatment at high temperature and for a short period of time in order to reduce the bacteriological risks of the suspension obtained according to 1, it being possible for said treatment to be chosen from HTST (high temperature short time) and UHT treatments;
1") carrying out an optional second step of high-pressure homogenization of the suspension obtained according to 1), and independently of the optional first step;

2) maintaining said suspension of pea proteins and of branched maltodextrins at a temperature of between 15 and 80°C, and preferably between 15 and 50°C, or, in the event of step 1') being carried out, bringing said suspension of pea proteins and of branched maltodextrins back to a temperature of between 15 and 80°C, and preferably between 15 and 50°C;
3) spray-drying said suspension in a spray-drying tower equipped with a high-pressure spray-drying nozzle with recycling of the fine particles at the top of the tower;
4) granulating in said spray-drying tower;
5) recovering the resulting granulated powder comprising the pea proteins and the branched maltodextrins.

11. The use of the granulated powder as claimed in any one of claims 1 to 6 or capable of being produced according to the implementation of the process as claimed in any one of claims 7 to 10, in the fields of cosmetics, detergence, agrochemistry, industrial or pharmaceutical formulations, construction materials, drilling fluids, in fermentation, in animal feed and in food applications, preferably as an emulsifying, overrun, stabilizing, thickening and/or gelling agent, in particular for totally or partially replacing animal proteins.

12. A cosmetic, detergent or agrochemical composition, industrial or pharmaceutical formulations, construction materials, drilling fluids, a fermentation medium, an animal nutritional composition or food applications comprising the granulated powder as claimed in any one of claims 1 to 6 or capable of being produced according to the implementation of the process as claimed in any one of claims 7 to 10.

13. An emulsifying, overrun, stabilizing, thickening and/or gelling agent, which can be used for totally or partially replacing animal proteins, comprising the granulated powder as claimed in any one of claims 1 to 6 or capable of being produced according to the implementation of the process as claimed in any one of claims 7 to 10.

14. A food formulation chosen from the group consisting of beverages, dairy products, preferably selected from the group consisting of fromage frais and ripened cheeses, processed cheeses or processed cheese spreads, fermented milks, milk smoothies, yogurts, specialty dairy products, and ice creams produced from milk, preparations intended for clinical nutrition and/or for individuals suffering from undernutrition, preparations intended for infant nutrition, mixtures of powders intended for diet products or for sportspersons, soups, sauces and cooking aids, meat-based products, fish-based products, all types of confectionary, cereal products, vegetarian products and ready meals, comprising an emulsifying, stabilizing, thickening and/or gelling agent, which can be used for totally or partially replacing animal proteins, as claimed in claim 13.

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008066308 A
- US 2002146487 A
- EP 0522800 A
- EP 0238946 A
- WO 2007017572 A
- WO 2008001183 A
- EP 1006128 B1
- EP 1558094 A

**Littérature non-brevet citée dans la description**

- **C-L HEYDLEY et al.** Developing novel pea starches. *Proceedings of the Symposium of the Industrial Biochemistry and Biotechnology Group of the Biochemical Society,* 1996, 77-87
- **DUMAS A.** *Annales de chimie,* vol. 33, 342
- **BUCKEE.** *Journal of the Institute of Brewing,* 1994, vol. 100, 57-64
- **J. GUEGUEN.** *Proceedings of european congress on plant proteins for human food,* 1983, 267-304
- *Pharmacopée Européenne,* Janvier 2005